(19) Europäisches Patentamt
European Patent Office
Office européen des brevets

(11) EP 2 110 549 A2

# (12) EUROPEAN PATENT APPLICATION

(43) Date of publication:
**21.10.2009 Bulletin 2009/43**

(21) Application number: **09005262.2**

(22) Date of filing: **09.04.2009**

(51) Int Cl.:
***F03D 7/02*** *(2006.01)*
***F03D 9/02*** *(2006.01)*
***F03D 9/00*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **15.04.2008 JP 2008105235**

(71) Applicant: **Hitachi Engineering & Services Co., Ltd.**
**Hitachi-shi,**
**Ibaraki 317-0073 (JP)**

(72) Inventors:
- **Oohara, Shinya**
  **Tokyo 100-8220 (JP)**
- **Hoshino, Naoki**
  **Ibaraki 317-0073 (JP)**
- **Iwata, Takeshi**
  **Ibaraki 317-0073 (JP)**

(74) Representative: **Beetz & Partner**
**Patentanwälte**
**Steinsdorfstrasse 10**
**80538 München (DE)**

## (54) Wind farm with battery storage

(57) In a wind farm in which a battery storage system (2) is attached to a wind turbine system (1), the present invention unfailingly performs a recovery charge process for secondary batteries (2-1-1-1), which constitute the battery storage system (2), without being affected by the ambient environment of the wind turbine system (1). The battery storage system (2), which is a part of the wind farm, is composed of a plurality of battery storages (2-1-1, 2-1-2, 2-1-3). The battery storages (2-1-1, 2-1-2, 2-1-3) each include a power converter (1-1-1-5, 1-1-1-6) and a secondary battery (2-1-1-1), and are capable of performing a charge/discharge process independently of each other. While one of the plurality battery storages (2-1-1, 2-1-2, 2-1-3) is performing a recovery charge process, the other battery storages, which are in a non-recovery charging state, perform a charge/discharge process for variation mitigation and, if necessary, supply the electric power for recovery charging to the battery storage in a recovery charging state.

FIG. 1

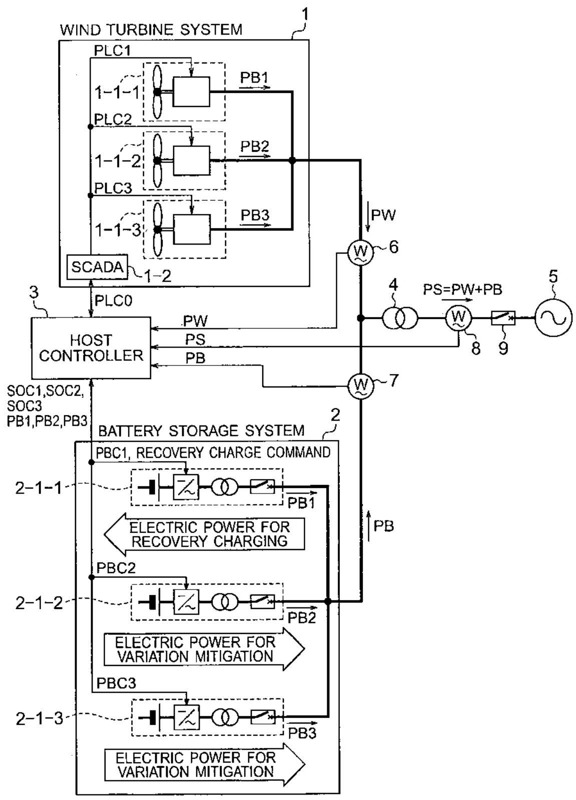


EP 2 110 549 A2

## Description

BACKGROUND OF THE INVENTION

(1) Field of the Invention

The present invention relates to a wind farm having a wind turbine system and a battery storage system.

(2) Description of the Related Art

A wind turbine system is used as a means for converting renewable energy existing in nature into electric energy. Wind energy, which varies with time, is used as an energy source for the wind turbine system. Therefore, the electric power generated by the wind turbine system also varies with time. A battery storage system may be attached to a wind turbine for the purpose of mitigating a variation in generated electric power. The battery storage system to be attached includes, for instance, a power converter and a secondary battery such as a lead-acid battery or a sodium-sulfur battery. Particularly when the lead-acid battery is used as the secondary battery and left discharged for a long period of time, sulfation occurs so that lead sulfate crystallizes on a lead-acid battery electrode. If sulfation occurs, the characteristics of the lead-acid battery remarkably deteriorate. Therefore, when the lead-acid battery is used to mitigate an electric power variation, it is generally overcharged on a periodic basis and recovery-charged to avoid sulfation.

A conventional recovery-charge method for the lead-acid battery attached to the wind turbine is disclosed, for instance, in JP-A-2001-286076. The method disclosed in JP-A-2001-286076 performs a recovery-charge process when the electric power generated by the wind turbine is not higher than a predetermined value. Further, at a certain stage of recovery charge, the method disclosed in JP-A-2001-286076 stops the operation of the wind turbine because it is impossible to mitigate the variation in the electric power output from the wind turbine.

SUMMARY OF THE INVENTION

To make efficient use of natural energy in a wind turbine system with a lead-acid battery while mitigating the variation in the electric power, it is necessary to prevent the deterioration of the lead-acid battery by unfailingly recovery-charging the lead-acid battery on a periodic basis. To achieve such a purpose, it is necessary to recovery-charge the lead-acid battery without being affected by the force of wind. For efficient use of natural energy, it is also preferred that the wind turbine system continuously perform a power generation operation even during a recovery charge process.

An object of the present invention is to provide a wind farm having a battery storage system that unfailingly recovery-charges a lead-acid battery without being affected by the magnitude of wind speed prevailing around a wind turbine system.

In accomplishing the above object, according to a first aspect of the present invention, there is provided a wind farm having a wind turbine system and a battery storage system, wherein the wind turbine system includes at least one wind turbine, wherein the battery storage system includes at least two battery storages, and wherein the plurality of battery storages each include a secondary battery as a constituent element and are connected to a power grid, the wind farm including: means for detecting the amount of electric power generated by the wind turbine system; means for detecting the total amount of electric power charged/discharged by the plurality of battery storages; and a controller for receiving the amount of generated electric power and the amount of charged/discharged electric power; wherein the controller includes means for computing an electric power charge/discharge command for the battery storage system, which mitigates an electric power variation at the wind farm; and wherein the wind farm includes means for adjusting the amount of electric power charged/discharged by the battery storage in a non-recovery charging state, which is one of the plurality of battery storages, in such a manner as to mitigate a variation in the electric power output from the wind farm when at least one of the plurality of battery storages is in a recovery charging state.

According to a second aspect of the present invention, there is provided the wind farm as described in the first aspect, wherein the battery storage in the non-recovery charging state includes means for supplying part or all of the electric power for recovery charging to the battery storage in the recovery charging state.

According to a third aspect of the present invention, there is provided the wind farm as described in the first aspect, wherein the battery storage in the recovery charging state includes means for suspending a recovery charge operation and adjusting the amount of electric power charge/discharge in such a manner as to mitigate the variation in the electric power output from the wind farm when the variation in the amount of electric power generated by the wind turbine system is greater than a predetermined value.

According to a fourth aspect of the present invention, there is provided the wind farm as described in the first aspect, further including: means for, when at least one of the plurality of battery storages is in the recovery charging state, making an electric power generation limit value of the wind turbine system smaller than the electric power generation limit value prevailing when no battery storage within the battery storage system is in the recovery charging state.

In accomplishing the above object, according to a fifth aspect of the present invention, there is provided a wind farm having a wind turbine system and an battery storage system and being connected to a power grid, the wind farm including: means for acquiring a predicted power generation value of the wind turbine system, which is based on meteorological forecast data; and means for scheduling the recovery charge operation for the battery storage system in accordance with the predicted power generation value of the wind turbine system.

In accomplishing the above object, according to a sixth aspect of the present invention, there is provided a wind farm having a wind turbine system, a battery storage system, and an auxiliary power generator, wherein the wind turbine system includes at least one wind turbine, wherein the battery storage system includes at least two battery storages, and wherein the plurality of battery storages each include a secondary battery as a constituent element and are connected to a power grid, the wind farm including: means for detecting the amount of electric power generated by the wind turbine system; means for detecting the total amount PB of electric power charged/discharged by the plurality of battery storages; means for detecting the amount of electric power generated by the auxiliary power generator; and a controller for receiving the amount of generated electric power, the amount of charged/discharged electric power, and the amount of electric power generated by the auxiliary power generator; wherein the controller includes means for computing an electric power charge/discharge command for the battery storage system, which mitigates electric power variation at the wind farm; means for computing an electric power generation command for the auxiliary power generator; and means for transmitting the electric power generation command to the auxiliary power generator; and wherein the auxiliary power generator includes means for supplying part or all of the electric power for recovery charging when at least one of the plurality of battery storages is in the recovery charging state.

According to a seventh aspect of the present invention, there is provided the wind farm as described in the sixth aspect, further including: means for adjusting the amount of electric power generation by the wind turbine system in such a manner that the electric power output from the wind farm is not higher than a predetermined value when the battery storage system is in a recovery charging state.

In accomplishing the above object, according to an eighth aspect of the present invention, there is provided a wind farm having a wind turbine system and a battery storage system, wherein the wind turbine system includes at least one wind turbine, wherein the battery storage system includes at least two battery storages, and wherein the plurality of battery storages each include a secondary battery as a constituent element and are connected to a power grid, the wind farm including: means for detecting the amount of electric power generated by the wind turbine system; means for detecting the total amount of electric power charged/discharged by the plurality of battery storages; means for detecting the amount of electric power output from the wind farm at a spot where the wind farm is connected to the power grid; and a controller for receiving the sum of electric power generated by the wind turbine system and charged/discharged electric power and the amount of electric power output from the wind farm; wherein the controller includes means for computing a loss caused by constituent elements of the wind farm from the sum of electric power generated by the wind turbine system and charged/discharged electric power and the amount of electric power output from the wind farm; means for computing an electric power charge/discharge command to be transmitted to the battery storage system; and means for correcting the loss in response to the electric power charge/discharge command.

The use of the present invention ensures that even if a battery storage performs a recovery charge process while the wind turbine system is operating to generate electric power, another battery storage mitigates the variation in the electric power output of the wind farm. Therefore, there is no need to stop the operation of the wind turbine system.

Further, even if the wind turbine system is not operating due to insufficient wind, a battery storage in a non-recovery charging state supplies electric power. Therefore, a battery storage in a recovery charging state can complete a recovery charge process without having to receive the electric power for recovery charging from the power grid. This makes it possible to unfailingly perform a recovery charge process without regard to the magnitude of wind speed prevailing around the wind turbine system and make efficient use of natural energy even when the recovery charge process is in progress.

BRIEF DESCRIPTION OF THE DRAWINGS

Embodiments of the present invention will be described in detail based on the following figures, wherein:

FIG. 1 shows a configuration of a wind farm according to the present invention;
FIG. 2 shows an example of a wind turbine that is a part of the wind farm according to the present invention;
FIG. 3 shows another example of the wind turbine that is a part of the wind farm according to the present invention;
FIG. 4 shows another example of the wind turbine that is a part of the wind farm according to the present invention;
FIG. 5 shows another example of the wind turbine that is a part of the wind farm according to the present invention;
FIG. 6 shows a battery storage that is a part of the wind farm according to the present invention;
FIGS. 7A to 7D show temporal changes in the electric power output of the wind farm according to the present invention;

FIG. 8 shows the timing at which battery storages according to the present invention perform a recovery charge process;
FIGS. 9A to 9D show temporal changes in the electric power output of the wind farm according to the present invention;
FIG. 10 shows a configuration of a wind farm host controller according to the present invention;
FIG. 11 shows a method of creating electric power charge/discharge commands according to the present invention;
FIG. 12 shows an example of the wind farm according to the present invention;
FIGS. 13A and 13B show temporal changes in the electric power output of the wind farm according to the present invention;
FIG. 14 shows a configuration of a wind farm according to a third embodiment of the present invention;
FIGS. 15A and 15B illustrate a method of scheduling a recovery charge process according to the present invention;
FIG. 16 shows a configuration of a wind farm according to a fourth embodiment of the present invention; and
FIGS. 17A to 17F show temporal changes in the electric power output of the wind farm according to the present invention.

## DETAILED DESCRIPTION OF THE PREFERRED EMBODIMENTS

Embodiments of the present invention will now be described with reference to the accompanying drawings.

[First Embodiment]

FIG. 1 is an overall schematic diagram illustrating a wind farm according to a first embodiment of the present invention. The wind farm according to the prevent invention includes, for instance, a wind turbine system 1, a battery storage system 2, a host controller 3, and a transformer 4, and transmits generated electric power to a power grid 5. A wattmeter 6 is installed at a connection point of the wind turbine system 1 to measure the electric power PW that is generated by the wind turbine system 1. Further, a wattmeter 7 is installed at a connection point of the battery storage system 2 to measure the electric power PB that is charged/discharged by the battery storage system 2. In addition, a wattmeter 8 is installed at a connection point of the wind farm to measure the electric power PS that is output from the wind farm. The relationship between the electric power output of the wind farm PS, the electric power generated by the wind turbine system PW, and the electric power charged/discharged by the battery storage system PB is expressed by Mathematical 1.

[Mathematical 1] PS = PW + PB - correction amount 1

Correction amount 1 represents the loss that is caused, for instance, by cables connecting the wattmeters 6, 7, 8 and by the transformer 4.

The host controller 3 creates electric power charge/discharge commands for a storage battery from the electric power PW generated by the wind turbine system 1 and the electric power charged/discharged by the battery storage system 2 for the purpose of mitigating a variation in the electric power PS that is output from the wind farm. The host controller 3 transmits the electric power charge/discharge commands PBC1, PBC2, PBC3 to battery storages 2-1-1, 2-1-2, 2-1-3. The battery storages 2-1-1, 2-1-2, 2-1-3 perform a charge/discharge process in accordance with the electric power charge/discharge commands. Further, the host controller 3 transmits a recovery charge command, which determines the timing at which the battery storages 2-1-1, 2-1-2, 2-1-3 enter a recovery charge mode. Upon receipt of the recovery charge command, the battery storages stop a charge/discharge process for variation mitigation and perform a recovery charge process. The host controller 3 creates an electric power generation limit command PLC0 for the wind turbine system 1 in order to mitigate the variation in the electric power output PS of the wind farm. The electric power generation limit command PLC0 is then transmitted to an SCADA 1-2, which is a part of the wind turbine system. The SCADA 1-2 transmits electric power generation limit commands PLC1, PLC2, PLC3 to wind turbines 1-1-1, 1-1-2, 1-1-3. The relationship between the electric power generation limit command PLC0 and the electric power generation limit commands PLC1, PLC2, PLC3 for the wind turbines is expressed by Mathematical 2.

[Mathematical 2] PLC0 = PLC1 + PLC2 + PLC3

The wind turbines 1-1-1, 1-1-2, 1-1-3 control their electric power generation in such a manner that the electric power generated by them does not exceed PLC1, PLC2, or PLC3. When the above system configuration and control method are used, the wind farm according to the present invention exercises control so that the electric power output PS of the wind farm does not exceed a predetermined value PLO. Although the wind turbine system 1 shown in FIG. 1 includes three wind turbines, the wind turbine system 1 according to the present invention may include one or a plurality of wind turbines. The advantages of the present invention are not limited by the number of wind turbines.

The wind turbines 1-1-1, 1-1-2, 1-1-3 will now be described in detail with reference to FIGS. 2 to 5. FIG. 2 shows a configuration of a wind turbine. The wind turbine 1-1-1 receives wind with a blade 1-1-1-1 and converts wind energy to rotational energy. The rotational energy is then transmitted to a power generator 1-1-1-4. The wind turbine 1-1-1 uses an anemometer 1-1-1-2 to measure the magnitude of wind speed prevailing around the wind turbine 1-1-1 and the direction of wind. The wind turbine 1-1-1 operates to generate electric power by controlling the horizontal orientation of a nacelle 1-1-1-10 and the pitch angle of the blade 1-1-1-1 in accordance with measurements taken by the anemometer 1-1-1-2.

The power generator 1-1-1-4 shown in FIG. 2 is a DC-excitation synchronous generator 1-1-1-4. A stator of the DC-excitation synchronous generator 1-1-1-4 is connected to a power grid through power converters 1-1-1-5, 1-1-1-6. A rotor of the DC-excitation synchronous generator 1-1-1-4 is also connected to the power grid through an exciter 1-1-1-9. An electric power generation operation is conducted by controlling the exciter 1-1-1-9 so as to adjust the magnitude of a DC-excitation current.

FIG. 3 shows an example of a wind turbine that uses a doubly-fed synchronous generator 1-1-1a-4 as a power generator. FIG. 4 shows an example of a wind turbine that uses a permanent-magnetic synchronous generator 1-1-1b-4 as a power generator.

The wind turbines shown in FIGS. 2, 3, and 4 can conduct a variable speed operation by adjusting the power converters and the pitch angle of a blade. Further, these wind turbines can exercise pitch angle control in conjunction with power converter control to ensure that the generated electric power does not exceed a predetermined value.

FIG. 5 shows an example of a wind turbine that uses an induction generator 1-1-1c-4 as a power generator. The wind turbine shown in FIG. 5 is configured so that a stator of the induction generator 1-1-1c-4 is directly connected to a power grid without bypassing a power converter. The wind turbine based on the induction generator 1-1-1c-4 can also control the pitch angle to ensure that the generated electric power does not exceed a predetermined value. The wind turbine system 1 includes one of the wind turbines shown in FIGS. 2, 3, 4, and 5 or a combination of these.

The battery storage system 2, which is a part of the wind farm, will now be described. The battery storage system 2 includes two or more battery storages 2-1-1, 2-1-2, 2-1-3. The individual battery storages will be described with reference to FIG. 6.

The battery storage 2-1-1 includes, for instance, a plurality of secondary batteries 2-1-1-1, a power converter 2-1-1-2, a transformer 2-1-1-3, and a breaker 2-1-1-4. Each secondary battery 2-1-1-1 includes unit secondary battery cells, which are series-connected and parallel-connected in accordance with capacity and voltage requirements. The power converter 2-1-1-2 has a built-in controller (not shown), which controls the power converter. The battery storage controls the power converter 2-1-1-2 to control charged/discharged electric power values PB1, PB2, PB3 in accordance with the electric power charge/discharge commands PBC1, PBC2, PBC3 from the host controller shown in FIG. 1. When a recovery charge command is received from the host controller 3, the battery storage does not comply with the electric power charge/discharge commands, but controls the power converter 2-1-1-2 to perform a storage battery recovery charge process. Further, the battery storages 2-1-1, 2-1-2, 2-1-3 measure the charge rates SOC1, SOC2, SOC3 for the secondary batteries and the charged/discharge power values PB1, PB2, PB3, and transmit the measured values to the host controller 3. The relationship between the charged/discharged electric power PB by the battery storage system 2 measured by the wattmeter 7 and the charged/discharged electric power values PB1, PB2, PB3 measured by the battery storages is expressed by Mathematical 3.

[Mathematical 3] PB = PB1 + PB2 + PB3 - correction amount 2

Correction amount 2 represents the loss that is caused, for instance, by cables connecting the wattmeter 7 to the battery storages 2-1-1, 2-1-2, 2-1-3. Although the battery storage system 2 shown in FIG. 1 includes three battery storages, the present invention can be implemented when the battery storage system 2 includes two or more battery storages. The number of battery storages is not limited to three.

The present invention uses a lead-acid battery as a secondary battery 2-1-1-1. The battery storage equipped with the secondary battery 2-1-1-1 for use with the present invention aims to mitigate the variation in the electric power output PS of the wind farm by performing a charge/discharge process in relation to the variation in the electric power generated by the wind turbine system 1. Therefore, the secondary battery 2-1-1-1 is either left partially discharged or operated most of the time. When the lead-acid battery is left discharged, lead sulfate crystallizes on the surface of a lead-acid battery electrode. The lead sulfate crystallized on the surface of the lead-acid battery electrode dissolves back into an electrolytic solution when a charging process is performed without undue delay after crystallization. However, if the lead-acid battery is left discharged for a long period of time, sulfation occurs so that a rigid lead sulfate crystal is formed on the surface of the lead-acid battery electrode.

The rigid sulfated lead sulfate crystal does not readily dissolve back into the electrolytic solution in a charge/discharge cycle because its solubility is low. Therefore, when sulfation occurs, the charge/discharge capacity of the lead-acid battery decreases to shorten the useful life of the lead-acid battery. When the lead-acid battery is used to mitigate electric power variation as described in conjunction with the present invention, a recovery charge (or reset charge) process is generally performed to avoid sulfation. The recovery charge process is performed to prevent sulfation by fully charging or overcharging the lead-acid battery at approximately two-week intervals. It takes approximately 6 to 8 hours to perform a recovery charge process. During the recovery charge process, the lead-acid battery is charged with the current or voltage maintained constant. Therefore, the battery storage in a recovery charging state cannot perform a charge/discharge process for mitigating the variation in the electric power output of the wind farm. If the recovery charge process can be performed without sacrificing the wind farm variation mitigation effect, the operating period of the wind turbine system 1 increases to make efficient use of natural energy. A recovery charge method according to the present invention will be described below.

A wind farm operating method according to the present invention will now be described with reference to FIGS. 7A to 7D. FIGS. 7A to 7D show temporal changes in the electric power output of the wind farm. FIG. 7A shows the electric power PW generated by the wind turbine system 1 and the electric power output PS of the wind farm. The electric power variation in the electric power output PS of the wind farm is mitigated when the battery storages 2 perform a charge/discharge process in relation to a large variation in the electric power generated by the wind turbine system 1. FIGS. 7B, 7C, and 7D show temporal changes in the electric power charged/discharged by the individual battery storages 2-1-1, 2-1-2, 2-1-3.

Before time 3 [hour], the three battery storages equally share the charged/discharged electric power required for variation mitigation. At time 3 [hour], the battery storage 2-1-1 receives a recovery charge command from the host controller 3 and enters the recovery charge mode. During a recovery charge process, the battery storage 2-1-1 does not perform a charge/discharge process for variation mitigation, but performs a charge process with the current and voltage maintained constant. Therefore, the remaining two battery storages 2-1-2, 2-1-3, which are in a non-recovery charging state, not only mitigate the electric power variation in the wind turbine system but also perform a charge/discharge process to mitigate the electric power variation caused by the recovery charge process.

After time 5 [hour], the electric power PW generated by the wind turbine system 1 is approximately zero (0) due, for instance, to a decrease in the wind speed prevailing around the wind turbine system 1. When the electric power PW generated by the wind turbine system 1 is zero (0), the battery storages 2-1-2, 2-1-3 in a non-recovery charging state perform a discharge operation to supply electric power required for recovery charging to the battery storage 2-1-1 in a recovery charging state. When the electric power required for recovery charging is supplied from the other battery storages as described above, a recovery charge process can be unfailingly performed independently of the wind speed prevailing around the wind turbine system 1. Even when the battery storages 2-1-2, 2-1-3 in a non-recovery charging state supply electric power to the battery storage 2-1-1 in a recovery charging state, the host controller 3 creates the electric power charge/discharge commands PBC2, PBC3 for the battery storages 2-1-2, 2-1-3 because it creates the electric power charge/discharge commands no matter whether any battery is in a recovery charging state.

FIG. 8 is a diagram illustrating the timing at which the battery storages 2-1-1, 2-1-2, 2-1-3 perform a recovery charge process. The battery storage recovery charge mode arises at two-week intervals. The battery storages switch into a recovery operation state alternately one by one. When a battery storage terminates its recovery charge process, the next battery storage initiates a recovery charge process. When this recovery charge pattern is used, the battery storages can unfailingly perform a recovery process at two-week intervals. FIG. 8 indicates that only one battery storage performs a recovery charge process at a time. However, if many battery storages are used, the advantages of the present invention can also be obtained by allowing a plurality of battery storages to simultaneously perform a recovery charge process.

FIGS. 9A to 9D illustrate how an operation is performed when a large electric power variation occurs during a recovery charge process according to the present invention. These figures indicate temporal changes in the electric power output of the wind farm. FIG. 9A shows the electric power PW generated by the wind turbine system 1 and the electric power output PS of the wind farm. The variation in the electric power PS generated by the wind farm is mitigated when the battery storage system 2 performs a charge/discharge process in relation to the electric power PW generated by the wind turbine system 1. FIGS. 9B, 9C, and 9D show the electric power charged/discharged by the individual battery storages 2-1-1, 2-1-2, 2-1-3.

The battery storage 2-1-1 shown in FIG. 9B starts performing a recovery charge process at time 2 [hour]. Therefore, after time 2 [hour], the other battery storages 2-1-2, 2-1-3 perform a charge/discharge process for variation mitigation. As the number of battery storages that can contribute toward variation mitigation is smaller than before the recovery charge process, the variation mitigation capability of the battery storage system 2 is lowered. Consequently, a large electric power variation in the wind turbine system 1, which occurs at approximately time 4.5 [hour] as indicated in FIG. 9A, cannot be handled by the two battery storages alone. When such a large electric power variation occurs, the battery storage 2-1-1 in a recovery charging state stops its recovery charge process temporarily and performs a charge/discharge process for variation mitigation. When a predetermined period of time elapses after the magnitude of electric power variation in the wind turbine system 1 is reduced to a predetermined value or smaller, the battery storage 2-1-1 resumes its recovery charge process. When a battery storage in a recovery charging state temporarily stops its recovery charge process as described above in response to a phenomenon where the variation in the electric power PW generated by the wind turbine system 1 is greater than a predetermined value, the variation mitigation capability of the entire battery storage system 2 can be maintained even during a recovery charge process. Further, when a recovery charge process is performed again after the variation in the electric power PW generated by the wind turbine system 1 is reduced to a predetermined value or smaller, the battery storage can be unfailingly recovery-charged.

FIG. 10 shows the configuration of the host controller 3, which implements the operation of the wind farm according to the present invention. A wind farm output power command computation section 3-1 in the host controller 3 uses a first-order lag filter or the like to create a wind farm output power command PS* from a generated power detection value PW of the wind turbine system 1. A subtractor 3-2 in the host controller 3 creates an electric power charge/discharge command PB*, which specifies the electric power to be charged/discharged by the battery storage system 2, from the difference between the wind farm output power command PS* and the generated power detection value PW as well as correction amount 1, which corrects the loss. Correction amount 1 is calculated from Mathematical 1. An electric power charge/discharge command distribution section 3-3 creates an electric power charge/discharge command for each battery storage. Further, a recovery charge command computation section 3-4 determines the recovery charge timing for each battery storage as indicated, for instance, in FIG. 8. A wind turbine power generation limit command computation section 3-5 computes the electric power generation limit command PLC0 for the wind turbine system 1. A variation amount computation section 3-6 computes the amount of variation in the electric power PW generated by the wind turbine system 1. If the variation amount exceeds a predetermined value as indicated in FIG. 9A, the transmission of the recovery charge command is stopped to temporarily cancel the recovery charge command.

The operation of the electric power charge/discharge command distribution section 3-3 will now be described in detail with reference to FIG. 11. The electric power charge/discharge command distribution section 3-3 creates an electric power charge/discharge command PB0*, which is to be output from a battery storage in a non-recovery charging state, by subtracting the electric power charged/discharged by a battery storage in a recovery charging state (PBC1 in the present embodiment) from an electric power charge/discharge command for the battery storage system 2 and adding correction amount 2, which provides loss correction, to the result of subtraction. Correction amount 2 is determined from Mathematical 3. The value PB0* is divided by the number of battery storages in a non-recovery charging state to create electric power charge/discharge command intermediate values PCB11, PBC12, PBC13 for the individual battery storages. Electric power charge/discharge commands PBSOC1, PBSOC2, PBSOC3 for correcting the charge rate SOC of the battery storages are then added to the electric power charge/discharge command intermediate values PCB11, PBC12, PBC13 to determine the electric power charge/discharge commands PBC1, PBC2, PBC3 for the battery storages 2-1-1, 2-1-2, 2-1-3. The electric power charge/discharge commands PBSOC1, PBSOC2, PBSOC3 for SOC correction are computed, for instance, from Mathematical 4.

[Mathematical 4] PBSOCi = Kp □ (SOCTi - SOCi), i = 1, 2, 3

where Kp is a proportionality coefficient, SOCTi is a target charge rate for a battery storage, and SOCi is an actual charge rate for a battery storage. The host controller can recovery-charge the battery storage system 2 by using the above-described computation means while the variation in the electric power output PS of the wind farm is continuously mitigated.

FIG. 1 indicates that the battery storages 2-1-1, 2-1-2, 2-1-3, which constitute the battery storage system 2, are centered around the transformer 4 of the wind farm. However, the battery storages need not always be centered around a single spot to obtain the advantages of the present invention. The present invention provides its advantages even when the battery storages 2-1-1, 2-1-2, 2-1-3 are dispersed away from the wind turbine system 1 as shown in FIG. 12. The same advantages are obtained even when an ordinary home, industrial equipment, or other load 13-1 is connected between a connection point of the wind turbine system 1 and a connection point of the battery storages 2-1-1, 2-1-2, 2-1-3. Similarly, the advantages of the present invention are still obtained even when a load 13-2 is connected between the battery storages 2-1-1, 2-1-2, 2-1-3.

When the installed battery storages are dispersed as shown in FIG. 12, the generated electric power values PB1, PB2, PB3 measured by the battery storages 2-1-1, 2-1-2, 2-1-3 and the electric power charge/discharge commands PBC1, PBC2, PBC3 and the recovery charge command for the battery storages 2-1-1, 2-1-2, 2-1-3 are exchanged with the host controller 3 through communication means 15. The communication means 15 is implemented by a wired LAN or WAN or a wireless communication link. Similarly, the electric power PW generated by the wind turbine system 1 and the electric power generation limit command PLC0 for the wind turbine system 1 are also exchanged with the host controller 3 through the communication means 15. When the installed battery storages are dispersed as shown in FIG. 12, the host controller 3 computes the electric power output PS of the wind farm in accordance with Mathematical 5.

[Mathematical 5] $PS = PW + PB1 + PB2 + PB3$

To mitigate the variation in the electric power output PS of the wind farm, the host controller 3 determines the electric power charge/discharge commands PBC1, PBC2, PBC3 for the battery storages 2-1-1, 2-1-2, 2-1-3 in accordance with the value PS, which is computed from Mathematical 5.

As described above, the present invention provides the wind turbine system with a plurality of battery storages so that some battery storages perform a recovery charge process while the other battery storages, which are in a non-recovery charging state, perform a charge/discharge process for variation mitigation. Further, the present invention has an operation mode in which the electric power for recovery charging is supplied from battery storages in a non-recovery charging state. When the operation method according to the present invention is used, the battery storages can unfailingly perform a recovery charge process on a periodic basis without being affected by the force of wind.

Performing a periodic recovery charge process increases the useful life of the secondary batteries, which constitute a storage battery, thereby making it possible to operate the wind farm for a long period of time and make efficient use of natural energy. In addition, as the variation mitigation effect can be maintained even during a recovery charge process, natural energy can be efficiently used without having to stop the operation of the wind turbine system.

[Second Embodiment]

A second embodiment of the present invention will now be described with reference to FIG. 13. The wind farm according to the second embodiment will not be described in detail because it has the basic configuration as the wind farm according to the first embodiment. The most distinctive feature of the second embodiment is that the electric power generation limit command PLC0 for the wind turbine system 1 is set during a recovery charge process of a battery storage 2 to be smaller than the command PLC0 for a situation where an operation is conducted by a battery storage system composed only of battery storages in a non-recovery charging state.

FIGS. 13A and 13B show the operating status of the battery storage system 2 of the wind farm according to the present embodiment and temporal changes in the electric power generated by the wind turbine system 1 according to the present embodiment. FIG. 13A shows temporal changes in the operating status of the battery storages 2-1-1, 2-1-2, 2-1-3. It indicates that the battery storages sequentially perform a recovery charge process between time T1 and time T2. When a certain battery storage is in a recovery charging state, the number of battery storages available for variation mitigation is decreased to reduce the variation mitigation capability of the battery storage system 2. Therefore, when a large electric power variation occurs in the wind turbine system 1, the first embodiment mitigates the variation by causing a battery storage in a recovery charging state to temporarily stop a recovery charge process. On the other hand, the second embodiment suppresses an electric power variation occurring in the wind turbine system 1 during a recovery charge process so that variation mitigation can be accomplished by the battery storages in a non-recovery charging state alone. More specifically, when a certain battery storage is in a recovery charging state, the host controller 3 sets the electric power generation limit command PLC0 for the wind turbine system to be smaller than in a situation where no battery storage is in a recovery charging state, as indicated in FIG. 13B. Setting the electric power generation limit command PLC0 to a small value inhibits the wind turbine system 1 from generating a large electric power PW, thereby avoiding a large variation in the electric power output of the wind turbine system 1.

The second embodiment is configured so that three battery storages are used. In a recovery charging state, therefore, the electric power generation limit command PLC0 is set to an electric power variation value at which variation mitigation can be accomplished by two battery storages. When the electric power generation limit command PLC0 is set as described above, it is possible to avoid a large variation in the generated electric power that cannot be mitigated by two battery storages, thereby allowing a battery storage in a recovery charging state to perform a recovery process, as indicated in FIG. 13B. Further, the electric power generated by the wind turbine system 1 is limited by the electric power generation limit command PLC0 during a recovery charge process of the battery storage system 2. However, a larger electric power can be generated than in a situation where the wind turbine system 1 is stopped during a recovery charge process.

As described above, the present invention sets the electric power generation limit command PLC0 for the wind turbine system 1 to a value not greater than a predetermined value and inhibits the electric power PW generated by the wind turbine system 1 from exceeding a predetermined value during a recovery charge process. When the operation method according to the present invention is used, the battery storage system 2 can unfailingly perform a recovery charge process. In addition, the wind turbine system 1 can continuously operate to generate electric power even when the battery storage system 2 is in a recovery charging state. Consequently, natural energy can be used with increased efficiency as compared to a situation where the wind turbine system 1 stops its electric power generation operation.

[Third Embodiment]

A third embodiment of the present invention will now be described with reference to FIG. 14. Elements of the third embodiment that are shown in FIG. 14 and designated by the same reference numerals as in FIG. 1 will not be redundantly described because they are identical with the counterparts of the first embodiment. The most distinctive feature of the third embodiment is that the wind farm receives a predicted power generation value PP from a power generation predictor 10 and schedules a recovery charge operation for each battery storage in accordance with the predicted power generation value PP.

In accordance with a predicted wind speed that is likely to prevail around the wind turbine system in the future and delivered from the Meteorological Agency, past meteorological data, and topographical data, the power generation predictor 10 predicts the electric power that the wind turbine system generates in the future. Although the period covered by electric power generation prediction is limited by the period of predicted value delivery from the Meteorological Agency, electric power generation prediction can be accomplished to cover a period of up to approximately 50 hours later.

The wind farm receives the predicted power generation value from the power generation predictor 10 over a signal line or wirelessly. In accordance with the received predicted power generation value PP, the wind farm schedules a recovery charge operation for each battery storage 2-1-1, 2-1-2, 2-1-3. FIGS. 15A and 15B illustrate the relationship between the predicted power generation value PP and recovery charge scheduling. While a battery storage is performing a recovery charge process, it cannot perform a charge/discharge process for variation mitigation. Therefore, if a large electric power variation occurs in the wind turbine system 1 during a recovery charge process, the large electric power variation might be transmitted to the power grid. To perform a recovery charge process for a battery storage with high efficiency, it is preferred that the recovery charge process be performed during a period during which the electric power variation in the wind turbine system 1 is small.

In the present embodiment, the wind farm determines the time T1 at which the predicted power generation value PP of the wind turbine system is not greater than a predetermined value as shown in FIG. 15A. While the electric power PW generated by the wind turbine system is small, the possible electric power variation is small; therefore, the probability of a large electric power variation during a recovery charge process is low. As shown in FIG. 15B, the present invention schedules a recovery charge operation for each battery storage 2-1-1, 2-1-2, 2-1-3 so that the recovery charge operation is performed after time T1, that is, during a period during which the predicted power generation value PP is smaller than the predetermined value. At time T1, the host controller 3 transmits a recovery charge command to each battery storage 2-1-1, 2-1-2, 2-1-3. Upon receipt of the recovery charge command, each battery storage 2-1-1, 2-1-2, 2-1-3 performs a recovery charge process with the current or voltage maintained constant. FIGS. 15A and 15B indicate that the recovery charge operation is scheduled during a period during which the predicted power generation value PP of the wind turbine system is not higher than the predetermined value. However, the advantages of the present invention are still obtained even when the recovery charge operation is scheduled during a period during which the variation rate of the predicted power generation value PP of the wind turbine system is not higher than a predetermined value.

As described above, the present embodiment schedules a recovery charge operation for each battery storage in accordance with the predicted power generation value of the wind turbine system. Scheduling a recovery charge operation in accordance with the present embodiment increases the probability of performing the recovery charge operation while the variation in the electric power generated by the wind turbine system is small,_thereby increasing the possibility of reducing the electric power variation to be transmitted to the power grid. Further, the present embodiment differs from the second embodiment in that the former eliminates the necessity of using the electric power generation limit command for the wind turbine system. This makes it possible to avoid the loss of natural energy due to wind turbine power generation limitation and use natural energy with increased efficiency.

[Fourth Embodiment]

A fourth embodiment of the present invention will now be described with reference to FIG. 16 and FIGS. 17A to 17F. Elements of the fourth embodiment that are shown in FIG. 16 and designated by the same reference numerals as in FIG. 1 will not be redundantly described because they are identical with the counterparts of the first embodiment. The most distinctive feature of the third embodiment is that the electric power for recovery-charging the battery storage system 2 is supplied from an auxiliary power generator. The fourth embodiment will be described in detail below.

The wind farm according to the fourth embodiment includes not only the wind turbine system 1 but also a gas engine generator 11, which serves as an auxiliary power generator. The gas engine generator 11 includes a gas engine and a synchronous generator. The gas engine generator 11 is capable of rotating the synchronous generator by using liquefied petroleum gas (LPG), hydrogen gas, or other fuel, and transmitting generated electric power to the outside. The electric power PGE generated by the gas engine generator is measured by a wattmeter 12. Further, the gas engine generator 11 is a power generation system that is capable of controlling its generated electric power PGE in accordance with an electric power generation command PGEC from the host controller.

A gas engine generator 11 used at a conventional wind farm is used to suppress a rush current of a transformer 4 at the wind farm. More specifically, the gas engine generator 11 is operated with a breaker 9 opened, and the breaker 9 is closed after the transformer 4 is excited from the secondary side. When this operation method is used, it is possible to suppress a rush current that may occur when the transformer 4 is connected to the power grid 5. The electric power generated by the gas engine generator 11 is not derived from renewable energy such as the force of wind. Therefore, when the wind farm operates to generate electric power, the gas engine generator 11 is generally stopped.

In the wind farm according to the present embodiment, the gas engine generator 11 is operated and used to recovery-charge the battery storage system 2 even when the wind farm is operating to generate electric power. In response to a request from a power grid operator, the wind farm may need a period during which the wind turbine system is disconnected from the power grid or the power output to the power grid is limited to a value not greater than a predetermined value. This period is called a disconnection period. The disconnection period of the wind farm arises in the nighttime during which the availability of a thermal power plant included in the power grid decreases. The reason is that if a large electric power variation occurs in the wind farm when there is a decrease in the availability of the thermal power plant, which compensates for power grid imbalance between electric power supply and demand, it is difficult for the power grid to absorb the electric power variation. During the disconnection period, therefore, it is necessary to reduce the electric power output of the wind farm to a value not greater than a predetermined value (e.g., not greater than 2% of the wind farm rating) or disconnect the wind farm from the power grid 5. The wind farm according to the present embodiment recovery-charges the battery storage system 2 during the disconnection period.

A method of operating the wind farm according to the present embodiment will be described below with reference to FIGS. 17A to 17F. FIGS. 17A to 17F illustrate the operating status of each constituent element of the wind farm and temporal changes in the generated electric power. In an example shown in FIGS. 17A to 17F, the disconnection period of the wind farm arises between time T1 and time T3. As shown in FIG. 17B, the electric power output PS of the wind farm is limited to a value not greater than a predetermined value (not greater than 2%, that is, not greater than 0.02 [PU]) during the disconnection period. Therefore, when a conventional control method is used, the use of wind energy is generally limited by the power generation limitation function of the wind turbine system 1 even if the wind speed is adequate for the wind turbine system 1 to generate electric power during the disconnection period.

The method of operating the wind farm according to the present embodiment will now be described in detail. The power grid operator notifies the wind farm's host controller 3 of the start time T1 and end time T2 of the disconnection period. As shown in FIG. 17C, the host controller 3 begins, immediately before the start time T1 of the disconnection period, to decrease the electric power generation limit command PLC0 for the wind turbine system 1 at a predetermined variation rate. The electric power generation limit command PLC0 is set so that its value is not greater than 2% at the start time T1 of the disconnection period. The electric power output PS of the wind farm is limited to not greater than 2% at the start time T1 of the disconnection period in order to limit the electric power generated by the wind turbine system 1 to a value not greater than PLC0. As shown in FIG. 17D, the host controller 3 transmits a recovery charge command to the battery storage system 2 during the disconnection period. Upon receipt of the recovery charge command from the host controller 3, the battery storages 2-1-1, 2-1-2, 2-1-3 perform a recovery charge process by using a constant-current/constant-voltage charging method.

The present embodiment assumes that the wind speed is adequate for the wind turbine system 1 to generate electric power during the first half of the disconnection period, that is, between time T1 and time T2, as shown in FIG. 17A. While the wind turbine system 1 is capable of generating electric power as during the first half of the disconnection period (between time T1 and time T2), the electric power required for recovery-charging the battery storage system 2 is supplied from the wind turbine system 1. More specifically, the host controller 3 varies the electric power generation limit command PLC0 for the wind turbine system 1 in accordance with the electric power charged by the battery storage system 2, as shown in FIG. 17C. The host controller 3 computes the electric power generation limit command PLC0 from Mathematical 6.

[Mathematical 6] PLC0 = -PB + correction amount 3

Correction amount 3, which is in Mathematical 6, prevents the electric power output PS of the wind farm from becoming negative (prevents the wind farm from becoming charged). It may be a fixed value that is approximately 1% of the wind farm rating. The use of the control method described above enables the wind turbine system 1 to supply charging power required for recovery charging and limit the electric power output PS of the wind farm to a value not greater than a predetermined value.

Meanwhile, at time T2 and time T3, which are within the disconnection period, the wind speed is decreased as shown in FIG. 17A. Therefore, the wind turbine system 1 cannot generate electric power or does not generate adequate electric power for supplying power to recovery-charge the battery storage system 2. During a disconnection period between time T2 and time T3 during which the wind speed is low, the present invention causes the gas engine generator 11 to supply electric power for recovery charging. More specifically, the host controller 3 varies the electric power generation command PGEC for the gas engine generator 11 in accordance with the electric power charged by the battery storage system 2, as shown in FIG. 17F. The gas engine generator 11 controls its electric power output in compliance with the electric power generation command PGEC. The host controller 3 computes the electric power generation command PGEC from Mathematical 7.

[Mathematical 7] PGEC = -PB - PW + correction amount 4

Correction amount 4, which is in Mathematical 7, functions similar to the correction amount in Mathematical 5 and is a fixed value that is approximately 1% of the wind farm rating. The use of the control method described above enables the gas engine generator 11 to supply charging power required for recovery charging and limit the electric power output PS of the wind farm to a value not greater than a predetermined value.

After a recovery charge process for the battery storage system 2 is completed, the gas engine generator 11 stops operating. After time T3 at which the disconnection period ends, the host controller 3 varies the electric power generation limit command PLC0 at a predetermined variation rate and allows the wind turbine system 1 to generate electric power in accordance with wind speed.

The present embodiment assumes that a gas engine generator 11 operating on gas fuel is used as the auxiliary power generator. However, the advantages of the present invention are still obtained when, for instance, an engine generator operating on gasoline or other liquid fuel, a photovoltaic module, or a fuel cell is used as the auxiliary power generator instead of the gas engine generator 11.

As described above, the present embodiment makes it possible to limit the electric power output PS of the wind farm to a value not greater than a predetermined value during the disconnection period of the wind farm while exercising electric power generation limitation control over the wind turbine system 1 to recovery-charge the battery storage system 2. Further, if the electric power generated by the wind turbine system 1 during a recovery charge process for the battery storage system 2 is insufficient, the auxiliary power generator supplies electric power so as to complete a recovery charge process for the battery storage system 2.

The use of this operation method makes it possible to use the electric power generated by the wind turbine system 1 for recovery charging purposes. Thus, natural energy can be used with high efficiency. In addition, the battery storage system 2 can be unfailingly recovery-charged to increase the useful life of the secondary batteries constituting the battery storage system 2. Consequently, the wind farm can be operated for a long period of time to make efficient use of natural energy.

The present invention can be applied to a photovoltaic system, a wave-power generation system, or other electric power generation system in which a secondary battery is attached to a power supply whose electric power output varies.

The present invention can also be applied to a battery storage system in which a secondary battery for variation mitigation is attached to a load whose power consumption varies.

## Claims

**1.** A wind farm having a wind turbine system (1) and a battery storage system (2), the wind turbine system (1) including at least one wind turbine, the battery storage system (2) including at least two battery storages (2-1-1; 2-1-2; 2-1-3), and the plurality of battery storages each including a secondary battery (2-1-1-1) as a constituent element and being connected to a power grid (5), the wind farm comprising:

means (6) for detecting the amount of electric power generated by the wind turbine system;
means (7) for detecting the total amount of electric power charged/discharged by the plurality of battery storages (2-1-1; 2-1-2; 2-1-3); and
a controller (3) for receiving the amount of generated electric power and the amount of charged/discharged electric power,

wherein: the controller (3) includes means for computing an electric power charge/discharge command for the battery storage system (2), which mitigates an electric power variation at the wind farm; and
the wind farm includes means for adjusting the amount of electric power charged/discharged by a battery storage (2-1-1; 2-1-2; 2-1-3) in a non-recovery charging state, which is one of the plurality of battery storages (2-1-1; 2-1-2; 2-1-3), in such a manner as to mitigate a variation in the electric power output from the wind farm when at least one of the plurality of battery storages (2-1-1; 2-1-2; 2-1-3) is in a recovery charging state.

**2.** The wind farm according to claim 1, wherein the battery storage (2-1-1; 2-1-2; 2-1-3) in the non-recovery charging state includes means for supplying part or all of the electric power for recovery charging to the battery storage(2-1-1; 2-1-2; 2-1-3) in the recovery charging state.

**3.** The wind farm according to claim 1, wherein the battery storage (2-1-1; 2-1-2; 2-1-3) in the recovery charging state includes means for suspending a recovery charge operation and adjusting the amount of electric power charge/discharge in such a manner as to mitigate the variation in the electric power output from the wind farm when the variation in the amount of electric power generated by the wind turbine system (1) is greater than a predetermined value.

**4.** The wind farm according to claim 1, further comprising means for, when at least one of the plurality of battery storages (2-1-1; 2-1-2; 2-1-3) is in the recovery charging state, making an electric power generation limit value of the wind turbine system (1) smaller than the electric power generation limit value prevailing when no battery storage (2-1-1; 2-1-2; 2-1-3) within the battery storage system (2) is in the recovery charging state.

**5.** The wind farm according to claim 1, further comprising:

means (10) for acquiring a predicted power generation value of the wind turbine system (1), which is based on meteorological forecast data; and
means for scheduling the recovery charge operation for the battery storage system (2) in accordance with the predicted power generation value of the wind turbine system (1).

**6.** The wind farm according to claim 1, further comprising:

an auxiliary power generator (11); and
means (12) for detecting the amount of electric power generated by the auxiliary power generator (11),

wherein: the controller (3) serves as a controller that receives the electric power generated by the auxiliary power generator (11), includes means for computing an electric power generation command for the auxiliary power generator (11), and includes means for transmitting the electric power generation command to the auxiliary power generator (11); and the wind farm includes means for causing the auxiliary power generator (11) to supply part or all of the electric power for recovery charging when at least one of the plurality of battery storage (2-1-1; 2-1-2; 2-1-3) is in the recovery charging state.

**7.** The wind farm according to claim 6, further comprising means for adjusting the amount of electric power generation by the wind turbine system (1) in such a manner that the electric power output from the wind farm is not higher than a predetermined value when the battery storage system (2) is in the recovery charging state.

**8.** A wind farm having a wind turbine system and a battery storage system (2), the wind turbine system (1) including at least one wind turbine, the battery storage system (2) including at least two battery storages (2-1-1; 2-1-2; 2-1-3), and the plurality of battery storages (2-1-1; 2-1-2; 2-1-3) each including a secondary battery as a constituent element and being connected to a power grid (5), the wind farm comprising:

means (6) for detecting the amount of electric power generated by the wind turbine system;
means (7) for detecting the total amount of electric power charged/discharged by the plurality of battery storages;
means (8) for detecting the amount of electric power output from the wind farm at a spot where the wind farm is connected to the power grid (5); and
a controller (3) for receiving the sum of electric power generated by the wind turbine system (1) and charged/discharged electric power and the amount of electric power output from the wind farm,

wherein the controller (3) includes:

means (3) for computing a loss caused by constituent elements of the wind farm from the sum of electric power generated by the wind turbine system and charged/discharged electric power and the amount of electric power output from the wind farm; means (3-3) for computing an electric power charge/discharge command to be transmitted to the battery storage system (2); and
means for correcting the loss in response to the electric power charge/discharge command.

FIG. 1

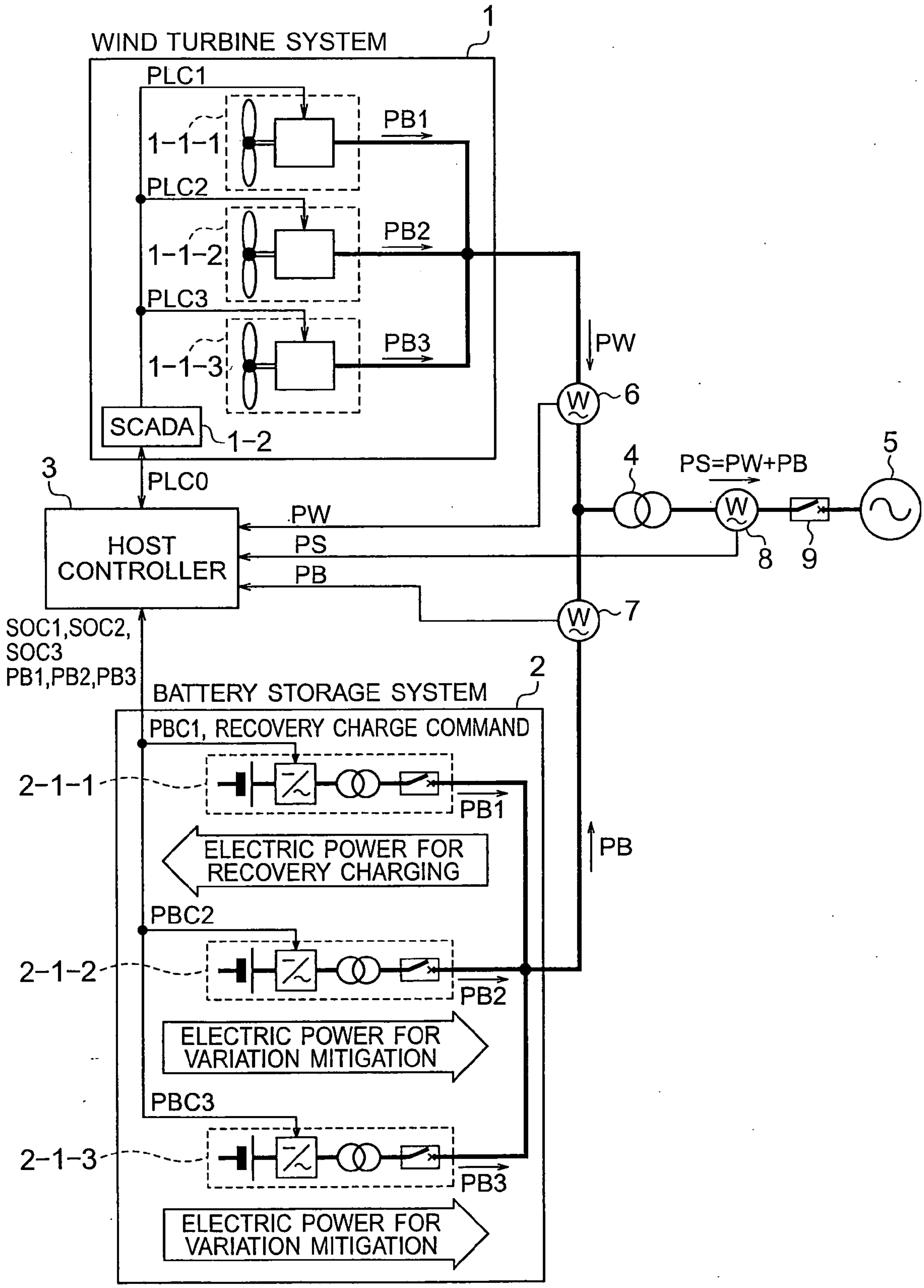
1
WIND TURBINE SYSTEM
PLC1
1-1-1
PB1
PLC2
1-1-2
PB2
PLC3
1-1-3
PB3
PW
6
SCADA
1-2
3
PLC0
4
PS=PW+PB
5
HOST CONTROLLER
PW
PS
PB
8
9
7
SOC1,SOC2,
SOC3
PB1,PB2,PB3
2
BATTERY STORAGE SYSTEM
PBC1, RECOVERY CHARGE COMMAND
2-1-1
PB1
ELECTRIC POWER FOR RECOVERY CHARGING
PB
PBC2
2-1-2
PB2
ELECTRIC POWER FOR VARIATION MITIGATION
PBC3
2-1-3
PB3
ELECTRIC POWER FOR VARIATION MITIGATION

FIG. 2

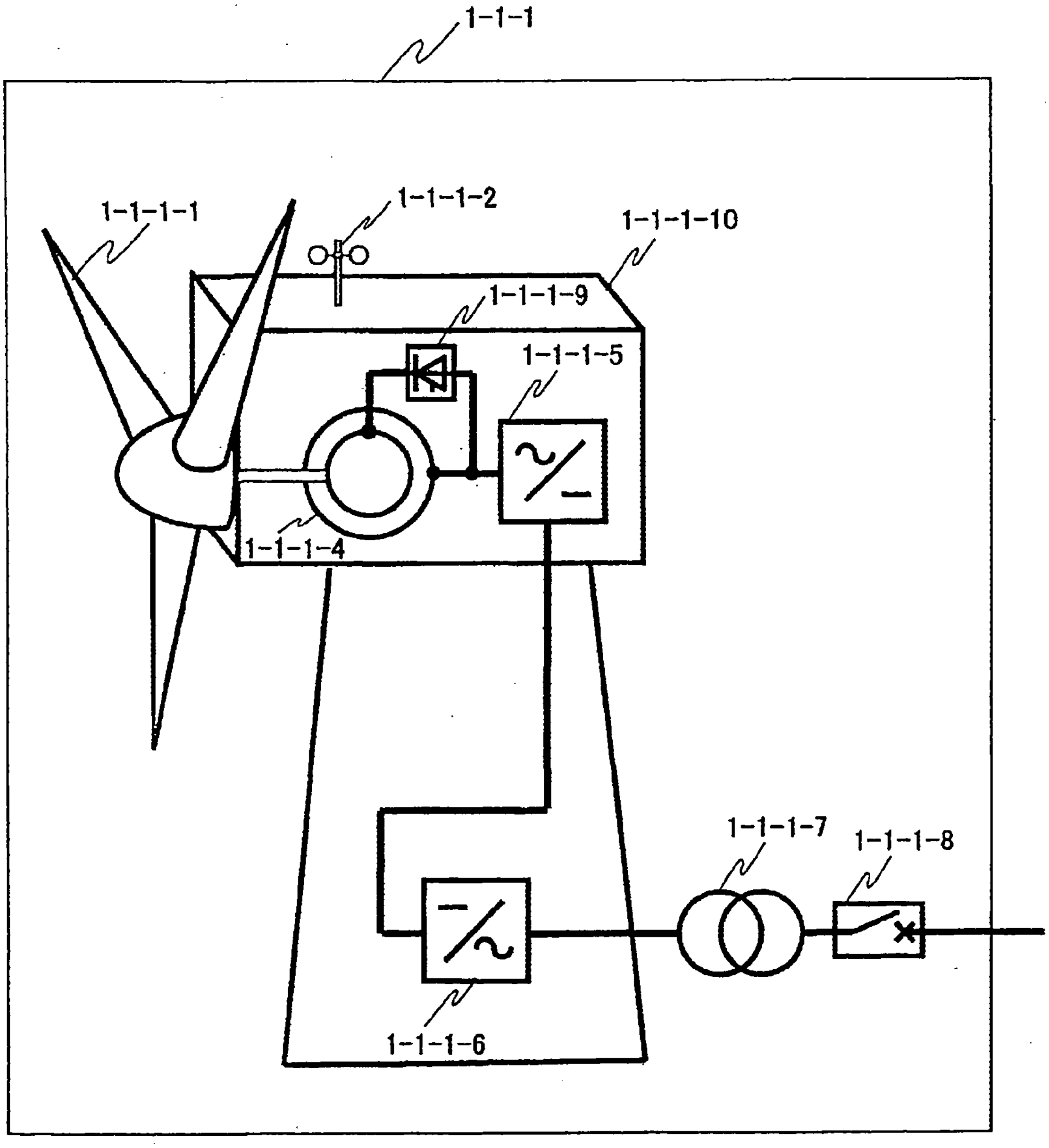

FIG. 3

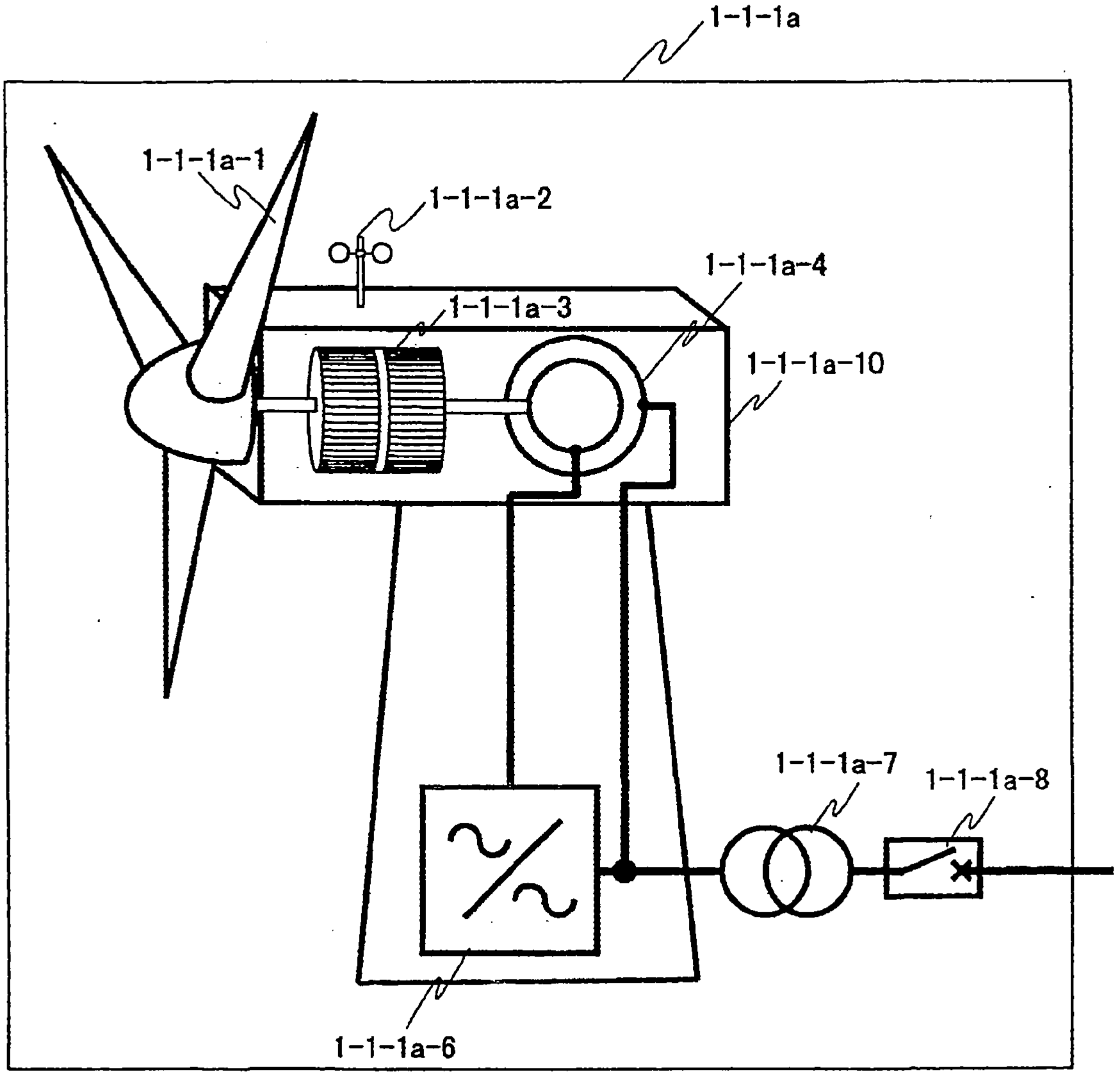

FIG. 4

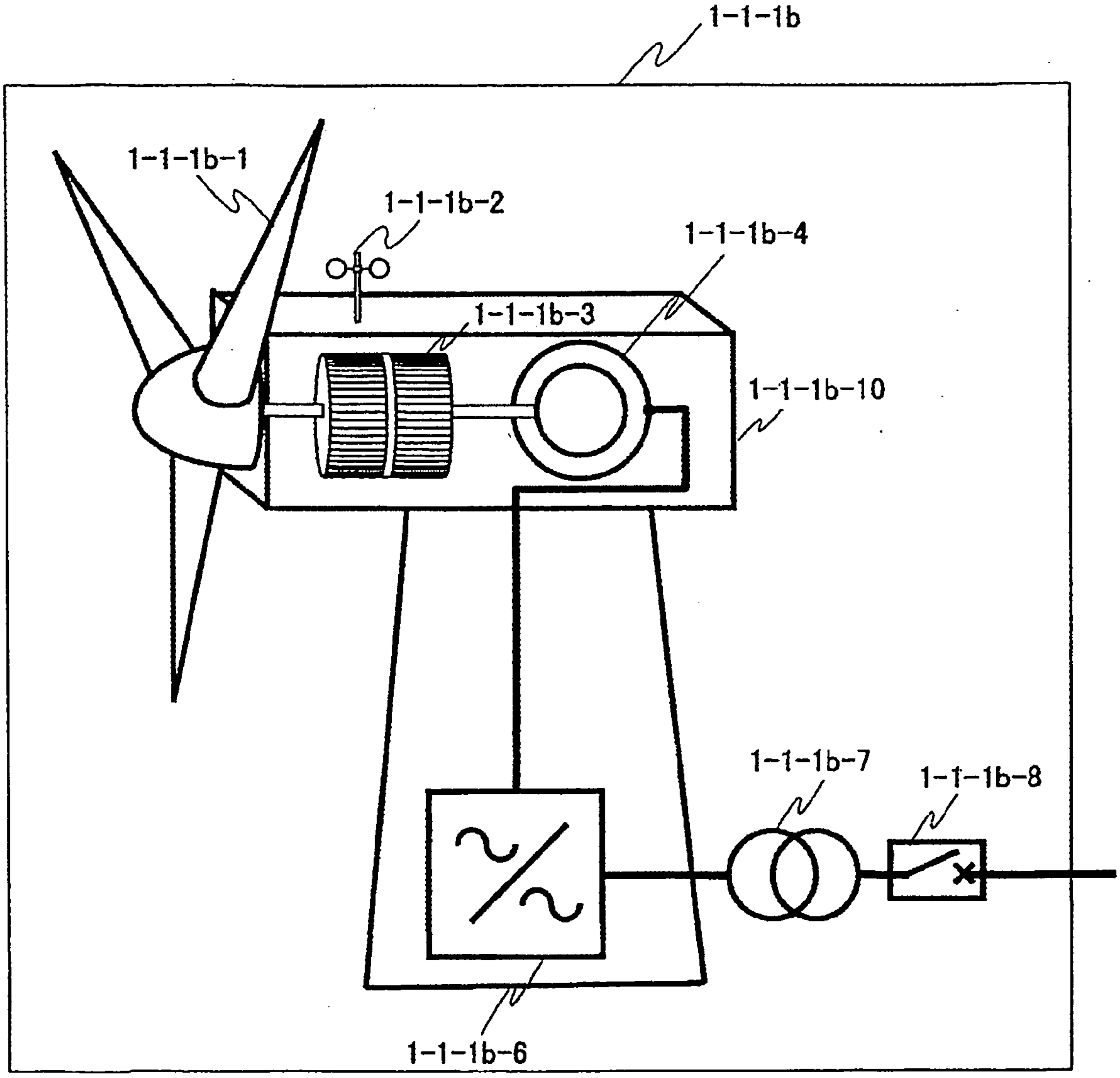

FIG. 5

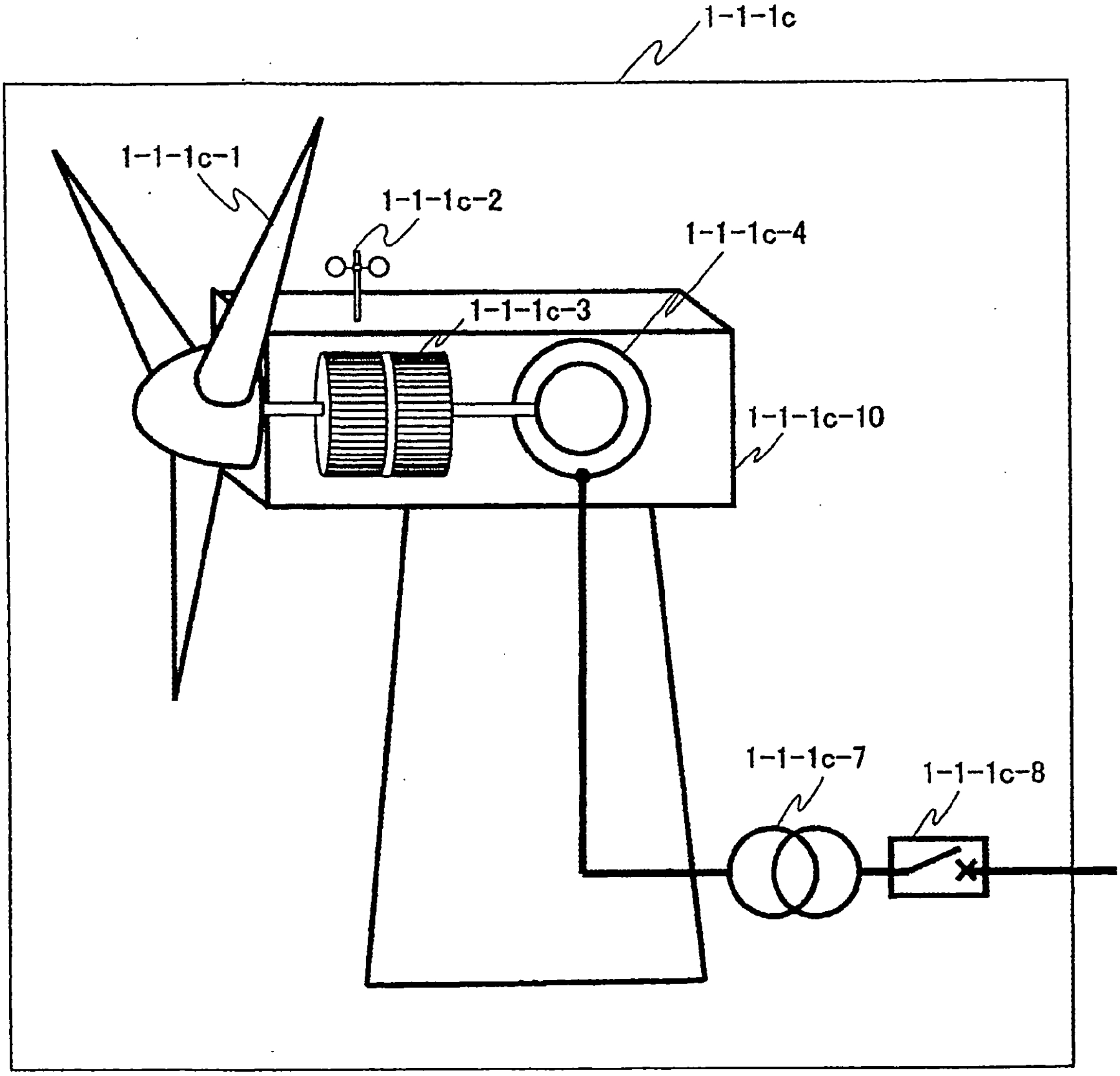

FIG. 6

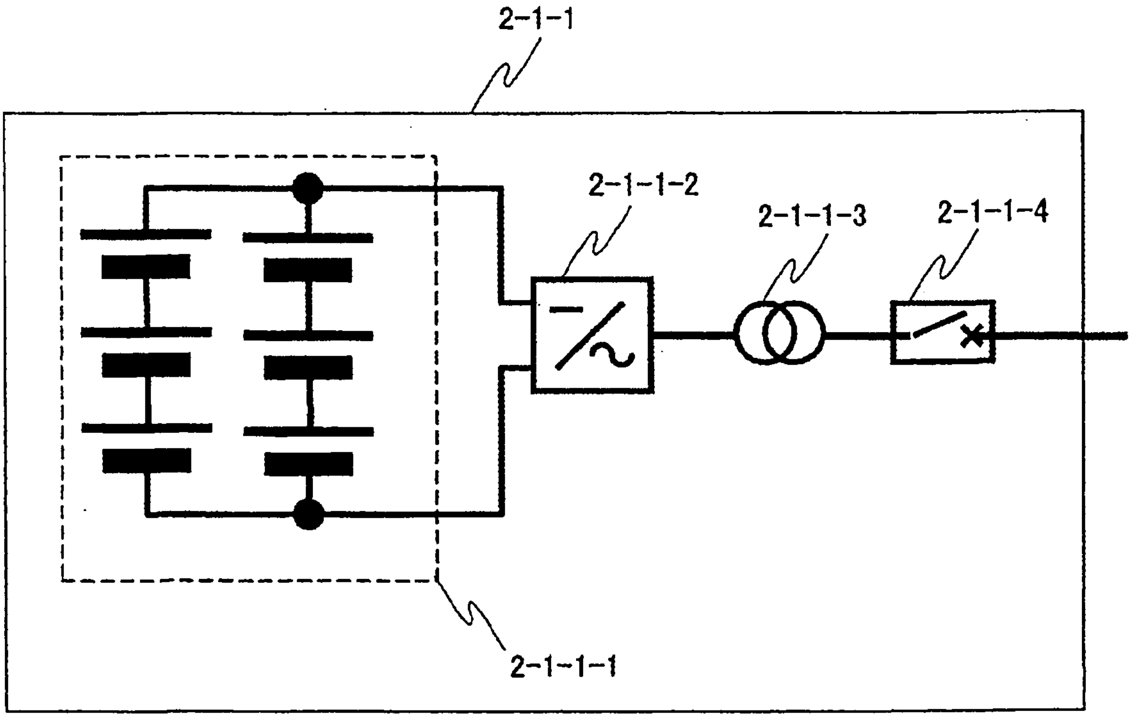

FIG. 7A ELECTRIC POWER OUTPUT OF WIND FARM

*)1PU= WIND FARM RATING

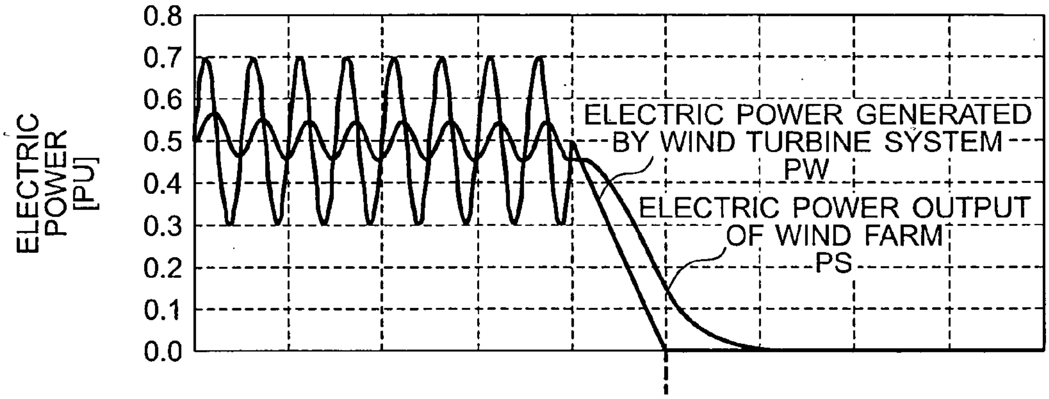


FIG. 7B ELECTRIC POWER CHARGED/DISCHARGED BY BATTERY STORAGE 2-1-1

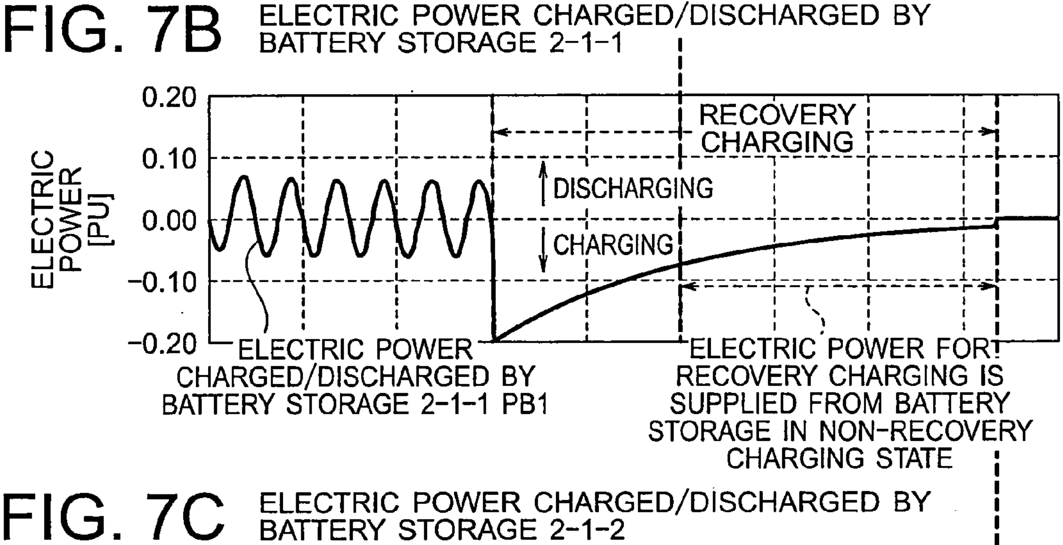


FIG. 7C ELECTRIC POWER CHARGED/DISCHARGED BY BATTERY STORAGE 2-1-2

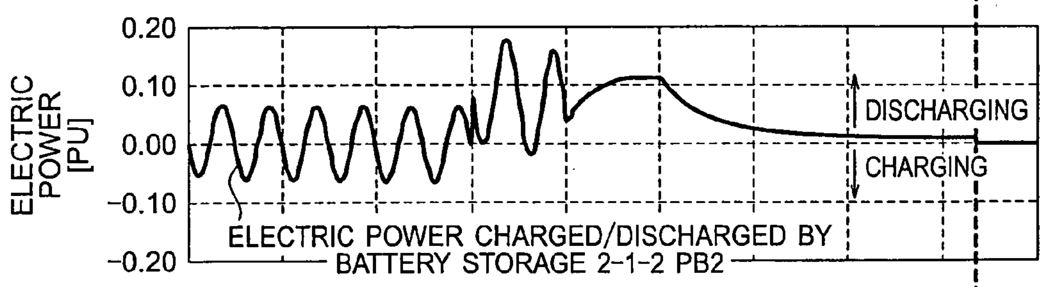


FIG. 7D ELECTRIC POWER CHARGED/DISCHARGED BY BATTERY STORAGE 2-1-3

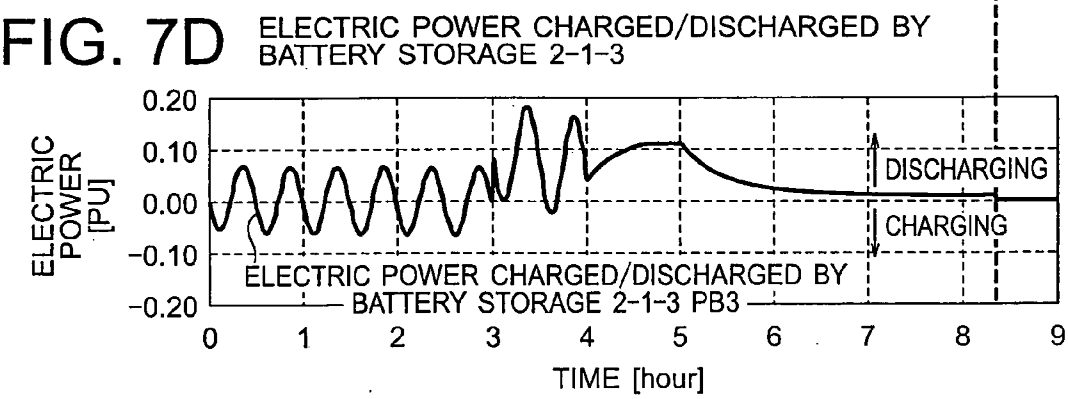

FIG. 8

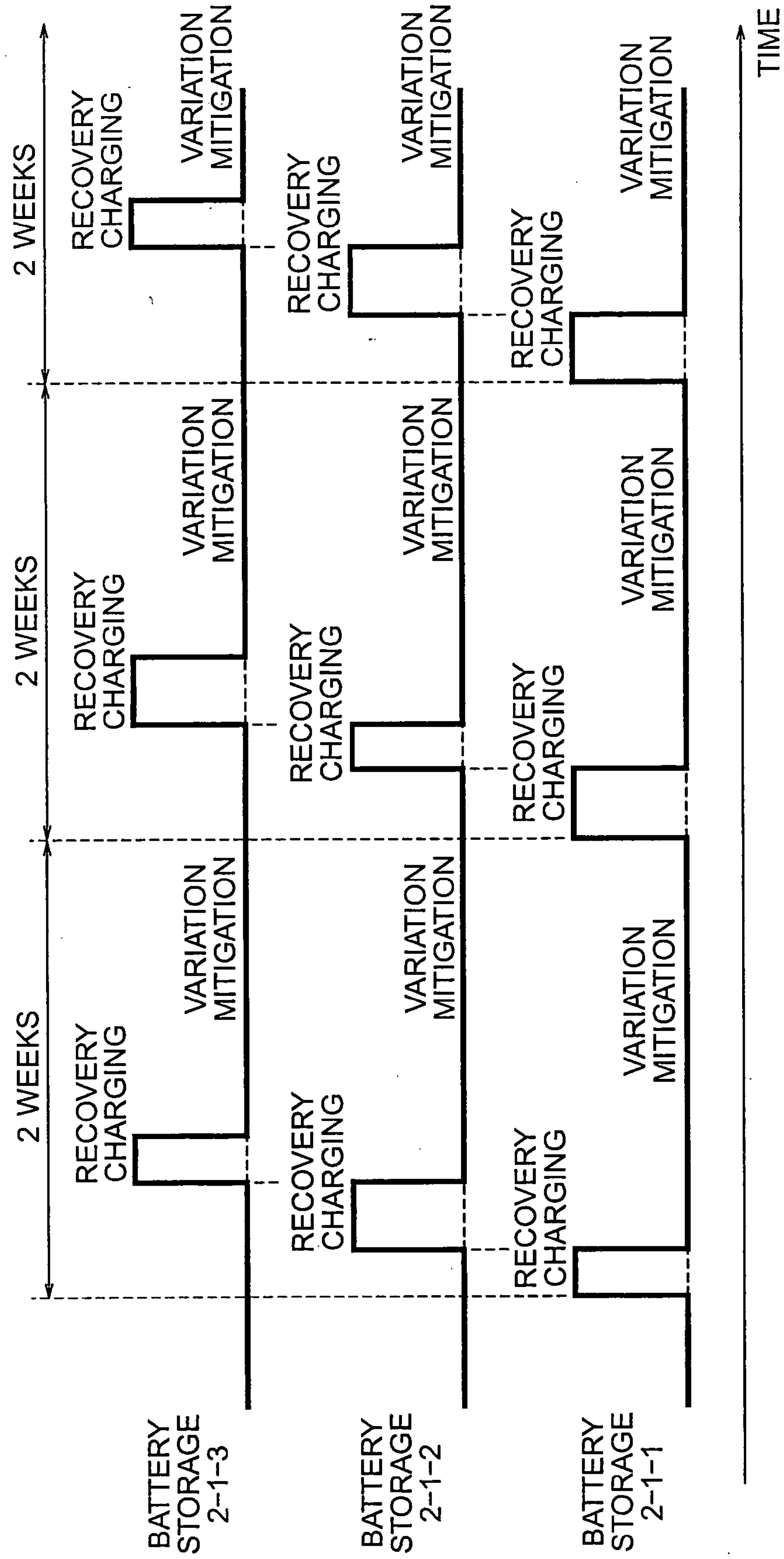
2 WEEKS
2 WEEKS
2 WEEKS
RECOVERY CHARGING
VARIATION MITIGATION
TIME
BATTERY STORAGE 2-1-3
BATTERY STORAGE 2-1-2
BATTERY STORAGE 2-1-1

FIG. 9A ELECTRIC POWER OUTPUT OF WIND FARM

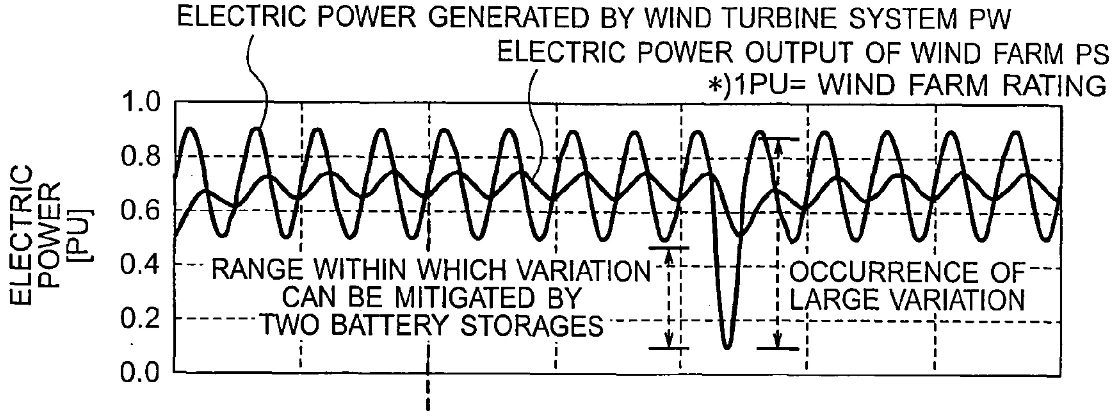


FIG. 9B ELECTRIC POWER CHARGED/DISCHARGED BY BATTERY STORAGE 2-1-1

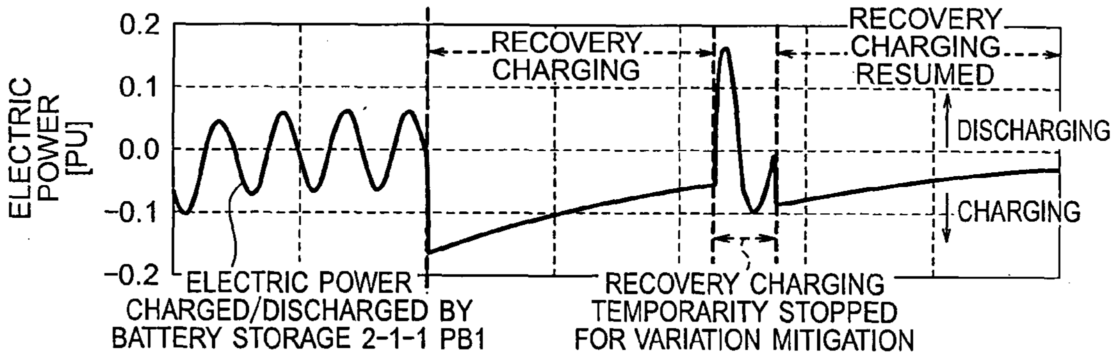


FIG. 9C ELECTRIC POWER CHARGED/DISCHARGED BY BATTERY STORAGE 2-1-2

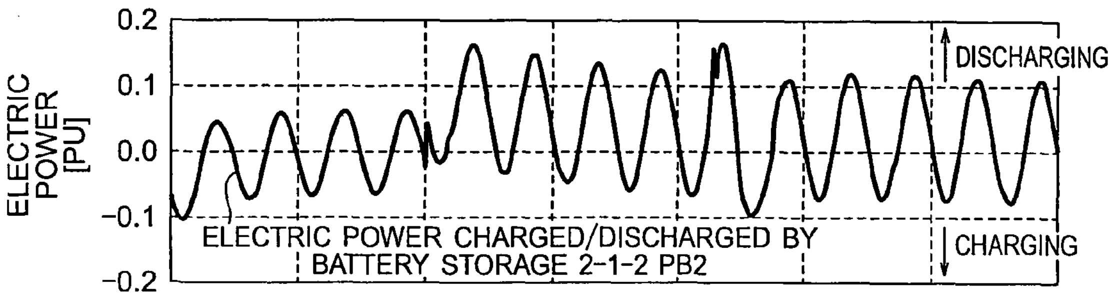


FIG. 9D ELECTRIC POWER CHARGED/DISCHARGED BY BATTERY STORAGE 2-1-3

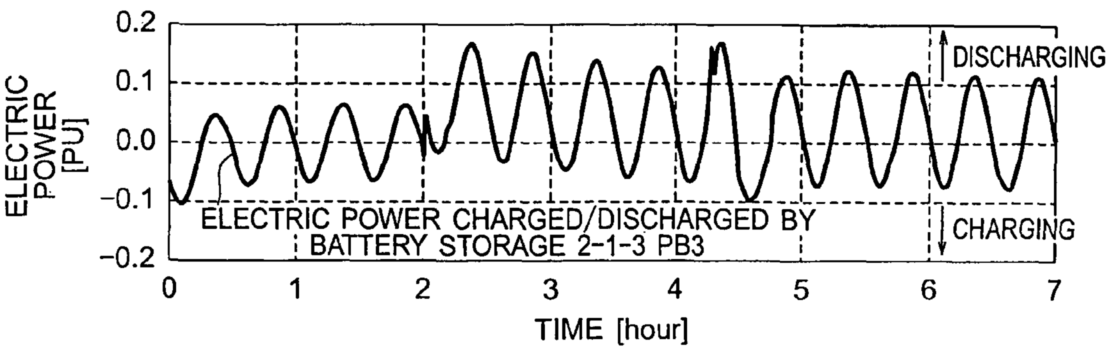

FIG. 10

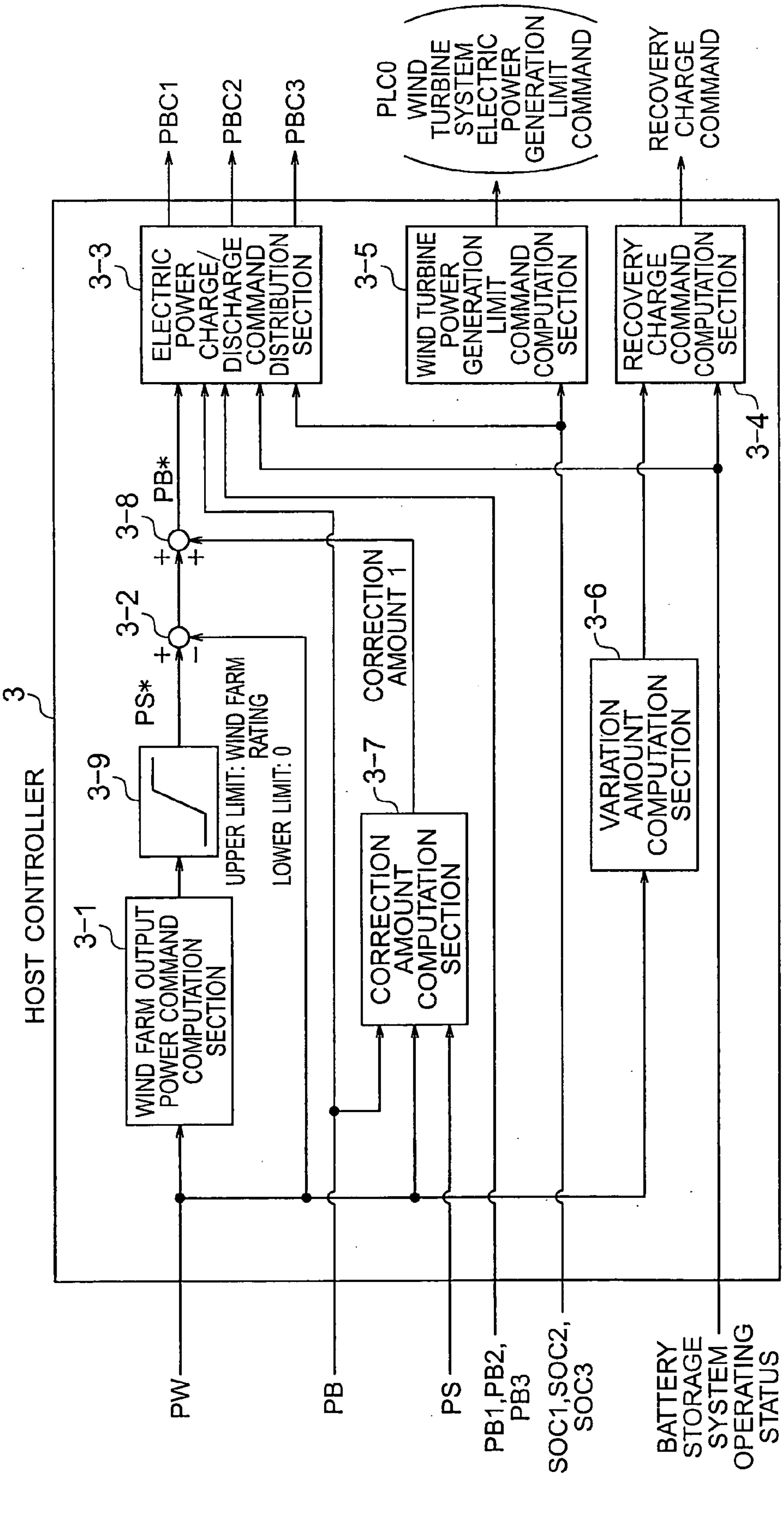
HOST CONTROLLER
3
3-1
WIND FARM OUTPUT POWER COMMAND COMPUTATION SECTION
3-9
UPPER LIMIT: WIND FARM RATING
LOWER LIMIT: 0
PS*
3-2
3-8
PB*
3-7
CORRECTION AMOUNT COMPUTATION SECTION
CORRECTION AMOUNT 1
3-3
ELECTRIC POWER CHARGE/ DISCHARGE COMMAND DISTRIBUTION SECTION
PBC1
PBC2
PBC3
3-5
WIND TURBINE POWER GENERATION LIMIT COMMAND COMPUTATION SECTION
PLC0 WIND TURBINE SYSTEM ELECTRIC POWER GENERATION LIMIT COMMAND
3-4
RECOVERY CHARGE COMMAND COMPUTATION SECTION
RECOVERY CHARGE COMMAND
3-6
VARIATION AMOUNT COMPUTATION SECTION
PW
PB
PS
PB1,PB2, PB3
SOC1,SOC2, SOC3
BATTERY STORAGE SYSTEM OPERATING STATUS

FIG. 11

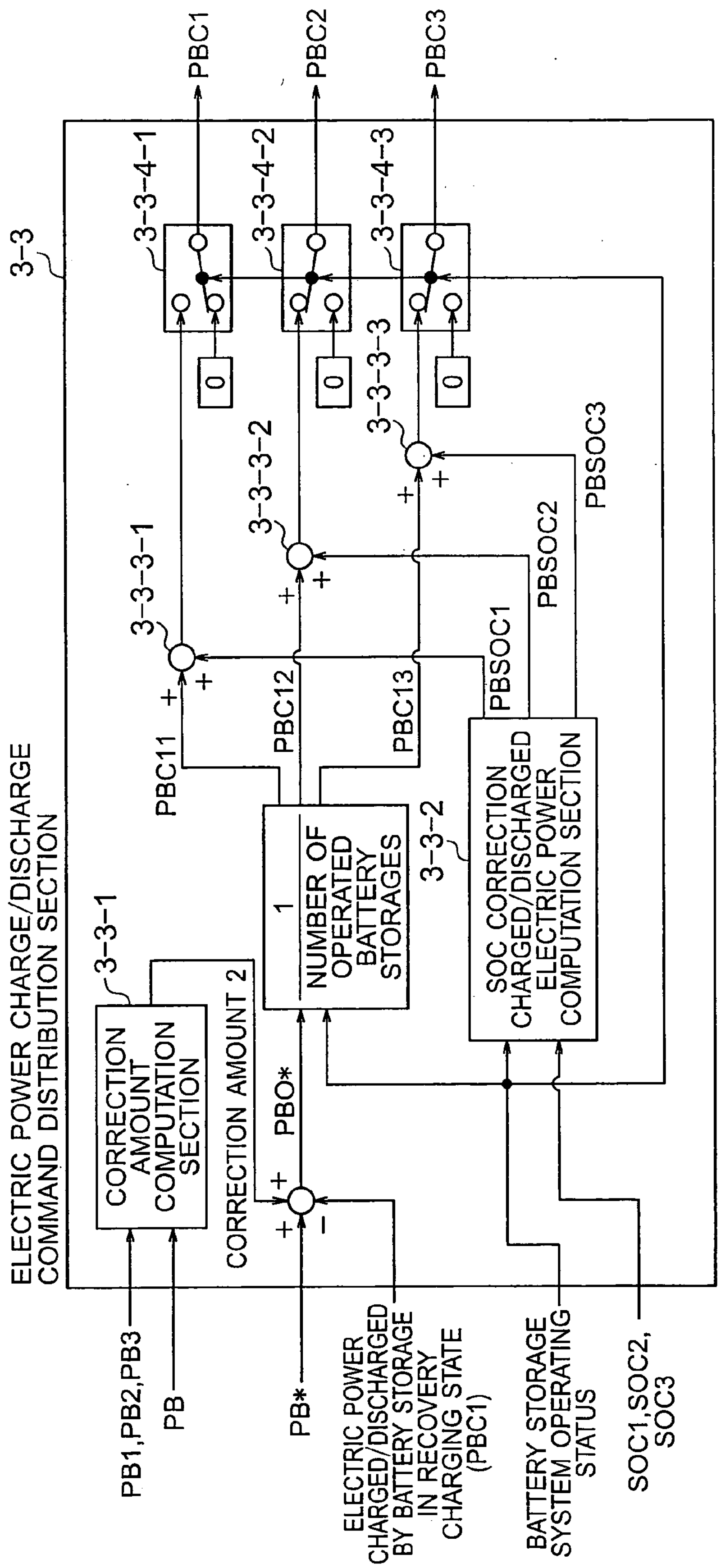
ELECTRIC POWER CHARGE/DISCHARGE COMMAND DISTRIBUTION SECTION
3-3
3-3-1
CORRECTION AMOUNT COMPUTATION SECTION
CORRECTION AMOUNT 2
PB1,PB2,PB3
PB
PB*
PBO*
ELECTRIC POWER CHARGED/DISCHARGED BY BATTERY STORAGE IN RECOVERY CHARGING STATE (PBC1)
BATTERY STORAGE SYSTEM OPERATING STATUS
SOC1,SOC2, SOC3
1 / NUMBER OF OPERATED BATTERY STORAGES
3-3-2
SOC CORRECTION CHARGED/DISCHARGED ELECTRIC POWER COMPUTATION SECTION
PBC11
PBC12
PBC13
PBSOC1
PBSOC2
PBSOC3
3-3-3-1
3-3-3-2
3-3-3-3
3-3-4-1
3-3-4-2
3-3-4-3
0
0
0
PBC1
PBC2
PBC3

FIG. 12

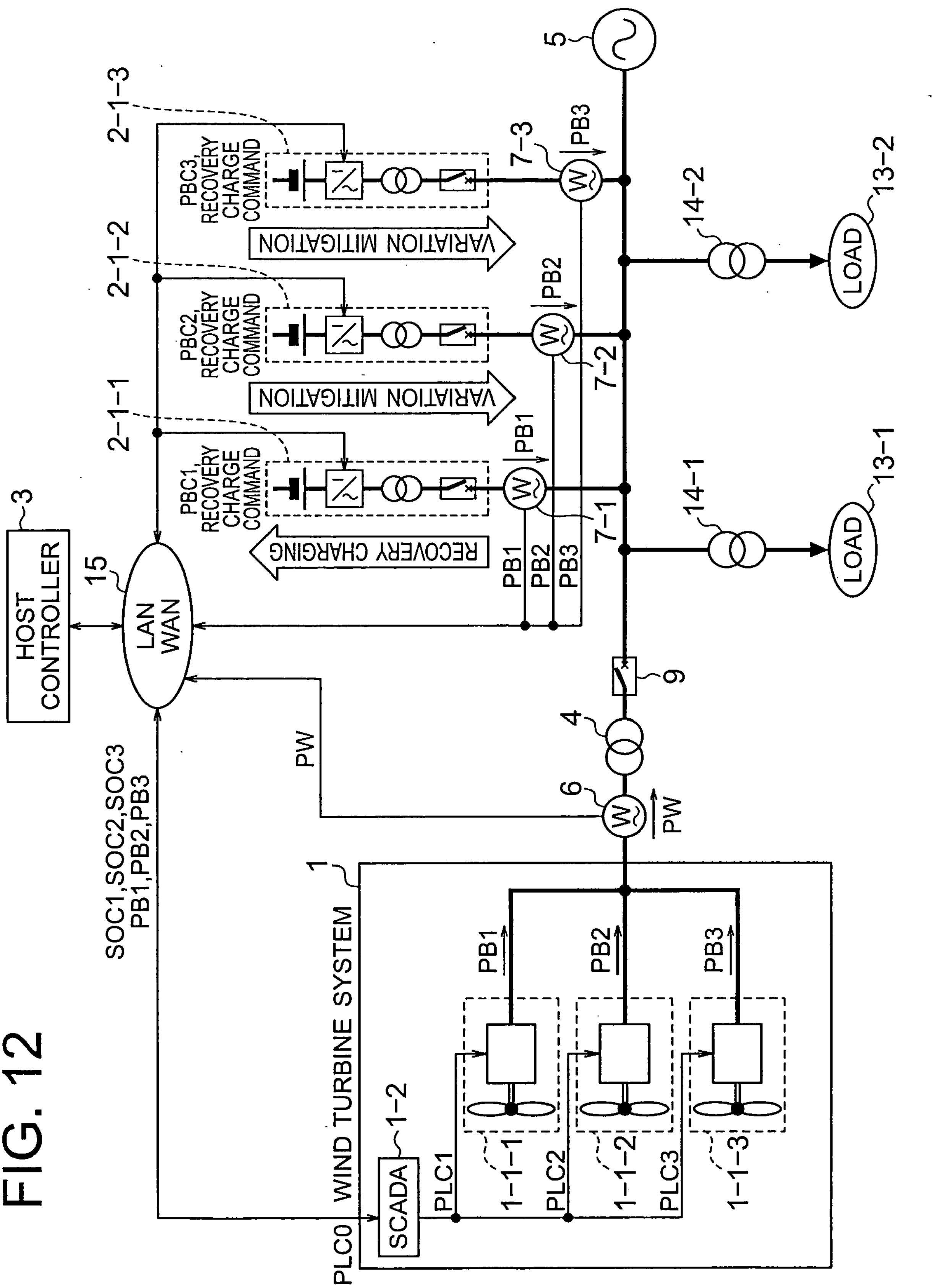
HOST CONTROLLER
3
LAN WAN
15
SOC1,SOC2,SOC3
PB1,PB2,PB3
PW
PB1
PB2
PB3
RECOVERY CHARGING
VARIATION MITIGATION
VARIATION MITIGATION
PBC1, RECOVERY CHARGE COMMAND
PBC2, RECOVERY CHARGE COMMAND
PBC3, RECOVERY CHARGE COMMAND
2-1-1
2-1-2
2-1-3
7-1
7-2
7-3
PB1
PB2
PB3
5
14-1
14-2
LOAD
LOAD
13-1
13-2
9
4
6
PW
1
WIND TURBINE SYSTEM
SCADA
1-2
PLC0
PLC1
PLC2
PLC3
1-1-1
1-1-2
1-1-3
PB1
PB2
PB3

FIG. 13A

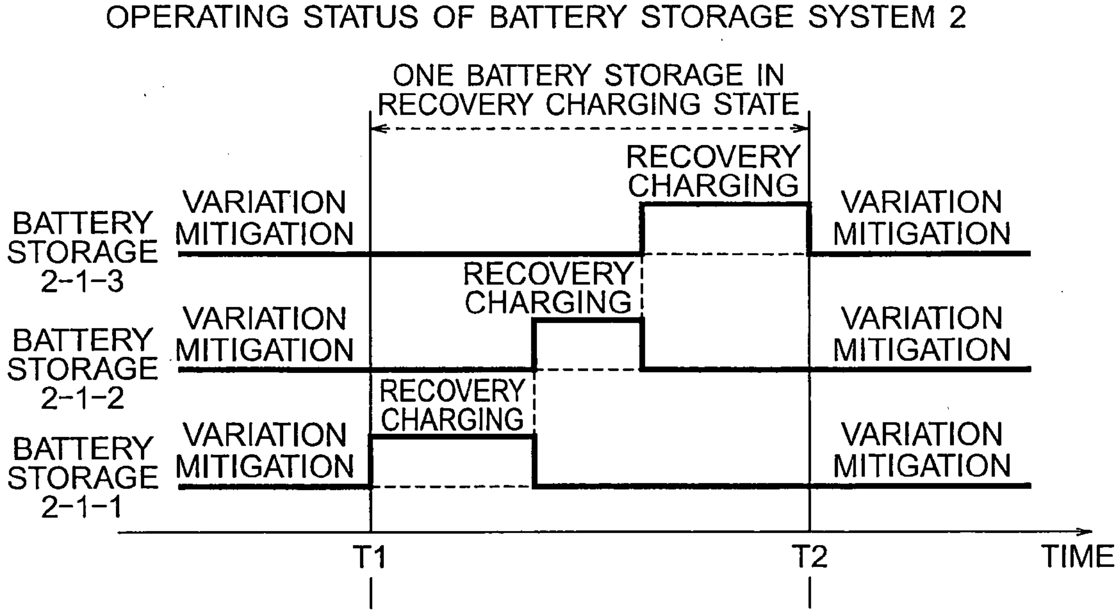


FIG. 13B

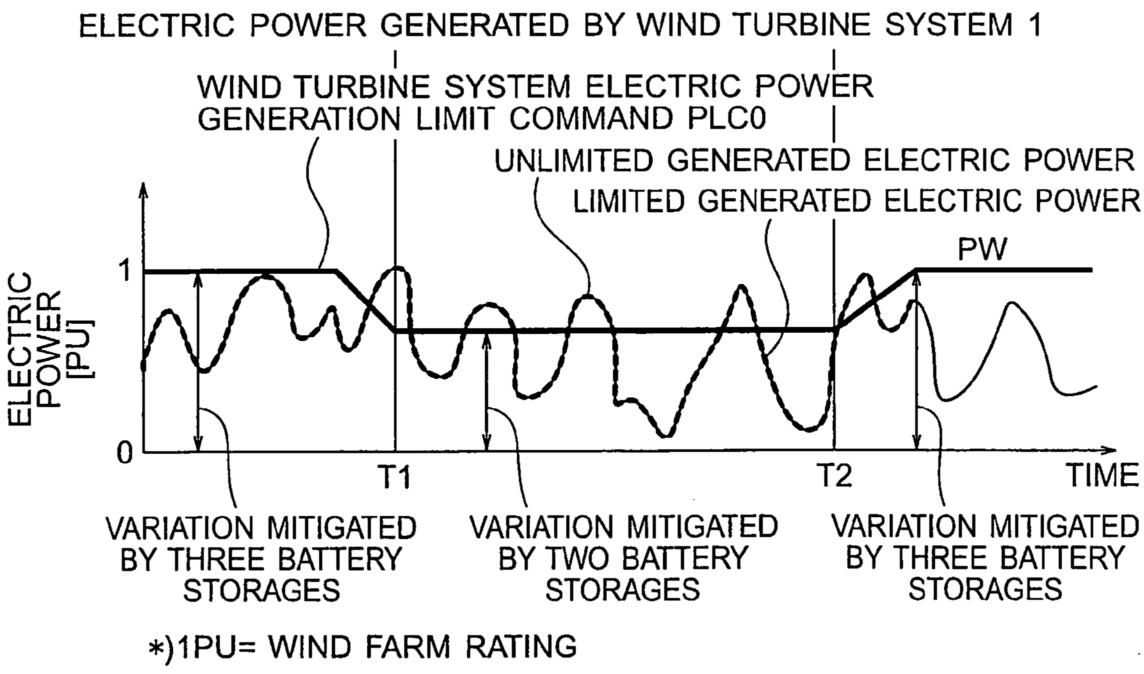

FIG. 14

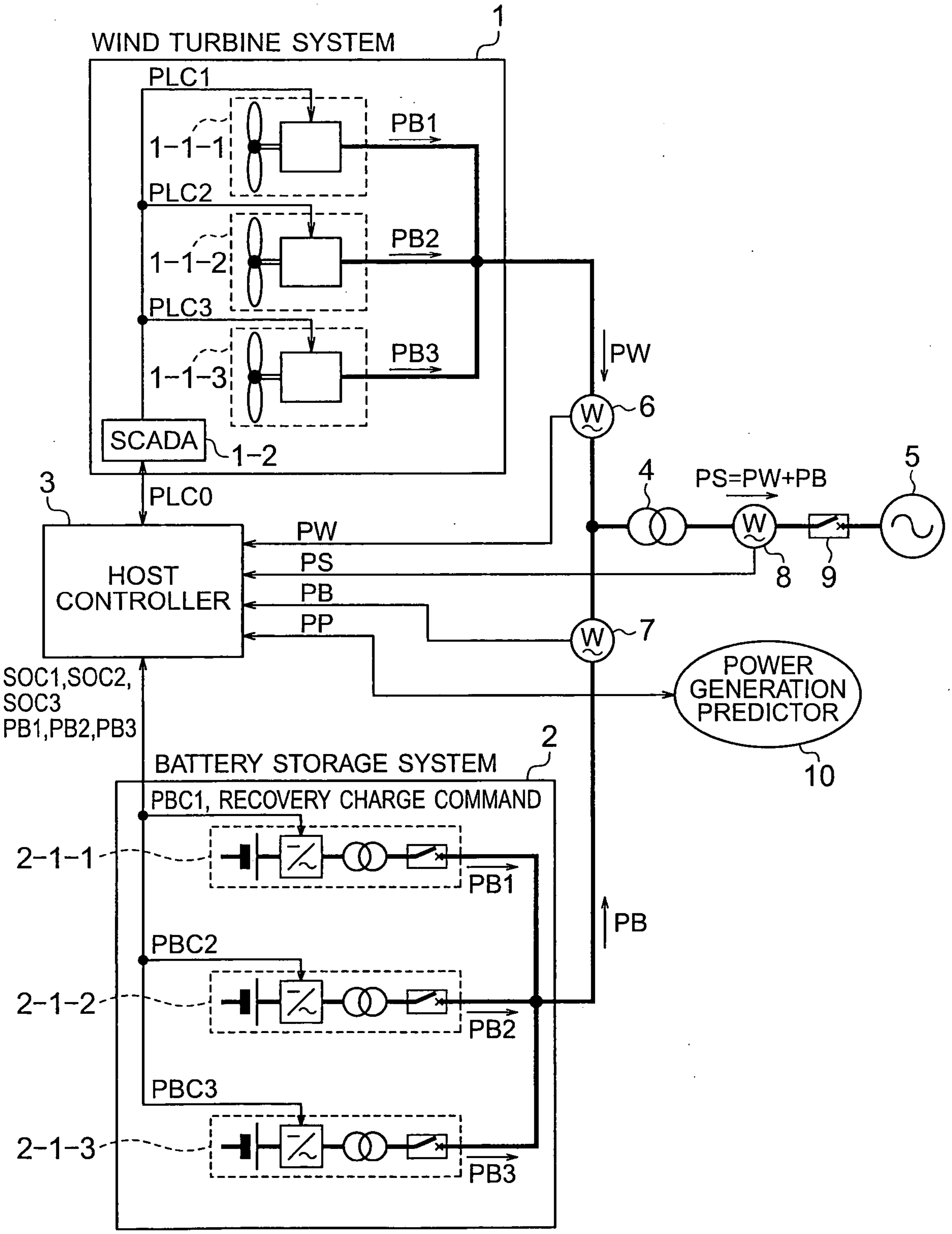
1
WIND TURBINE SYSTEM
PLC1
1-1-1
PB1
PLC2
1-1-2
PB2
PLC3
1-1-3
PB3
SCADA
1-2
PW
6
3
PLC0
4
PS=PW+PB
5
PW
PS
PB
PP
HOST CONTROLLER
8
9
7
POWER GENERATION PREDICTOR
10
SOC1,SOC2, SOC3
PB1,PB2,PB3
2
BATTERY STORAGE SYSTEM
PBC1, RECOVERY CHARGE COMMAND
2-1-1
PB1
PB
PBC2
2-1-2
PB2
PBC3
2-1-3
PB3

# FIG. 15A

PREDICTED POWER GENERATION VALUE OF WIND TURBINE SYSTEM

*)1PU= WIND FARM RATING

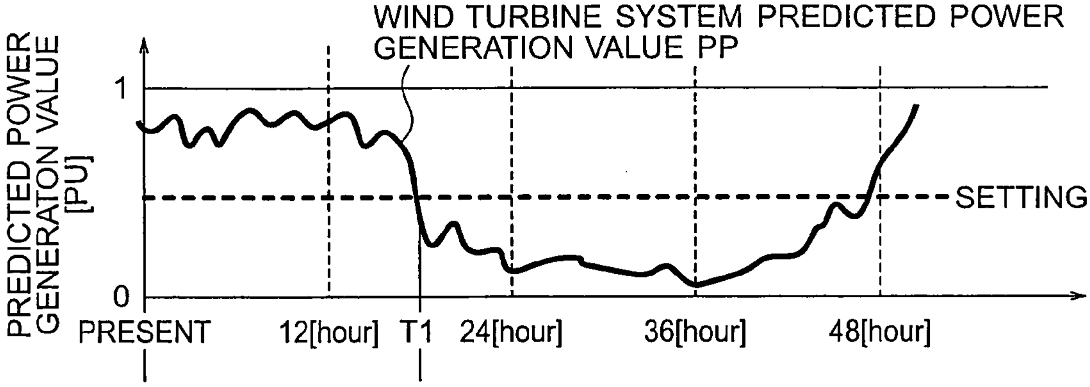


# FIG. 15B

RECOVERY CHARGING SCHEDULE OF BATTERY STORAGE SYSTEM 2

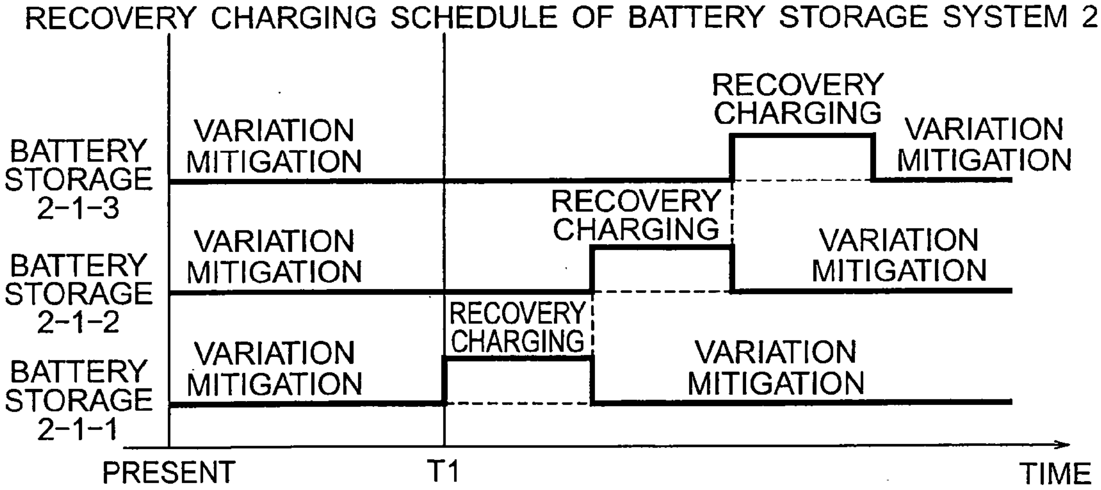

FIG. 16

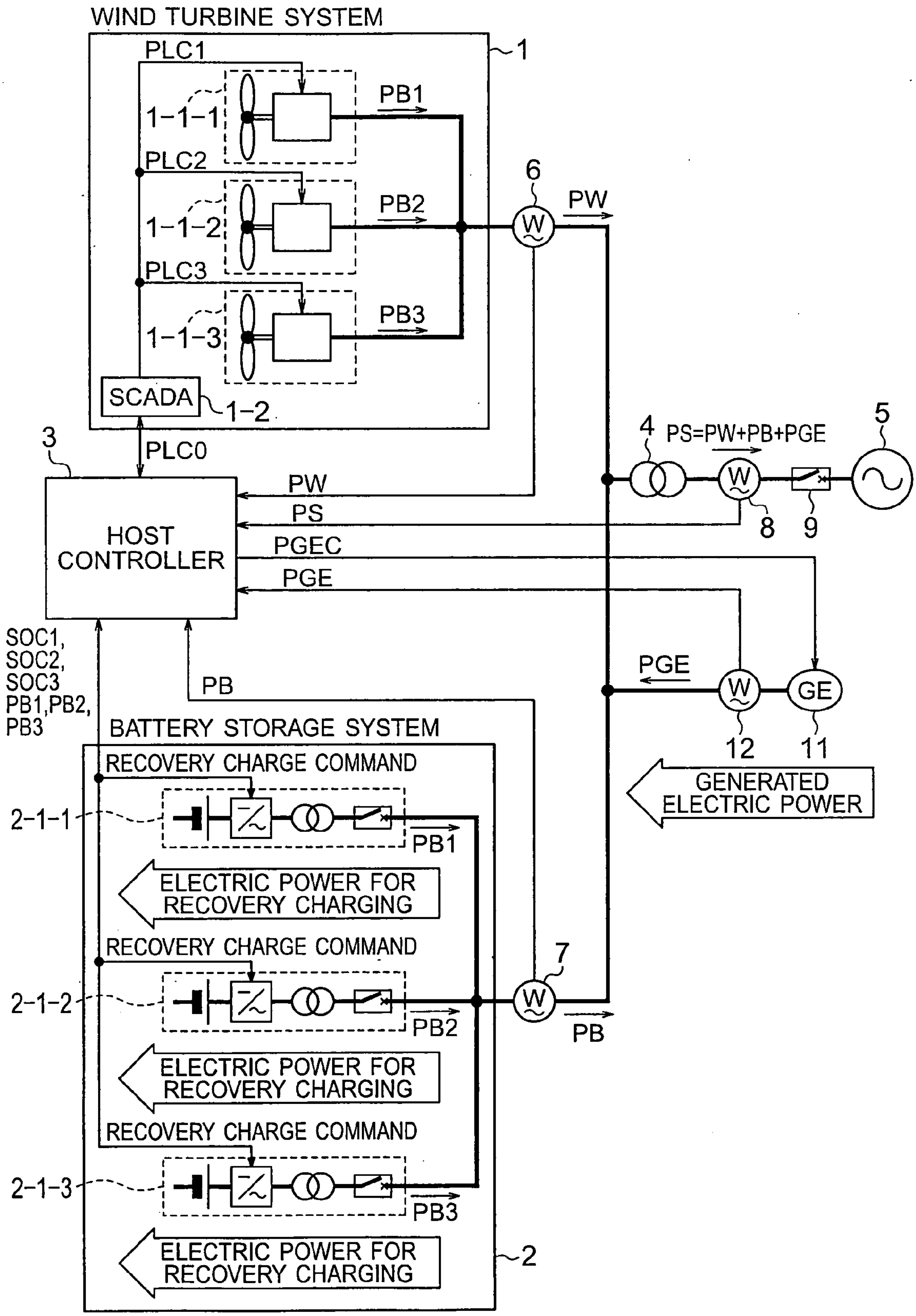
WIND TURBINE SYSTEM
1
PLC1
1-1-1
PB1
PLC2
1-1-2
PB2
PLC3
1-1-3
PB3
6
PW
SCADA
1-2
3
PLC0
4
PS=PW+PB+PGE
5
HOST CONTROLLER
PW
PS
PGEC
PGE
8
9
SOC1, SOC2, SOC3 PB1,PB2, PB3
PB
PGE
12
11
GE
BATTERY STORAGE SYSTEM
RECOVERY CHARGE COMMAND
GENERATED ELECTRIC POWER
2-1-1
PB1
ELECTRIC POWER FOR RECOVERY CHARGING
RECOVERY CHARGE COMMAND
7
2-1-2
PB2
PB
ELECTRIC POWER FOR RECOVERY CHARGING
RECOVERY CHARGE COMMAND
2-1-3
PB3
ELECTRIC POWER FOR RECOVERY CHARGING
2

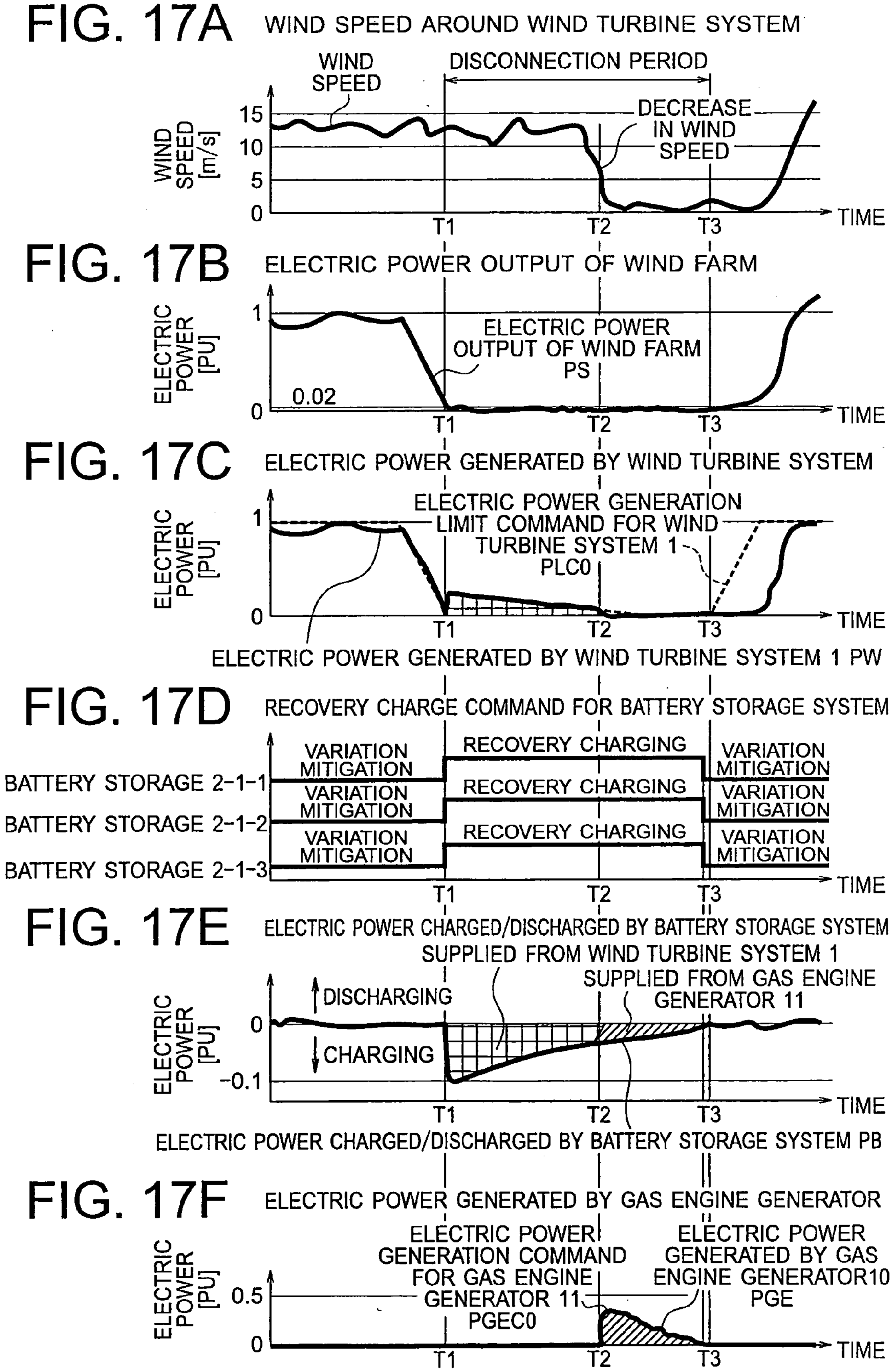
FIG. 17A
WIND SPEED AROUND WIND TURBINE SYSTEM
WIND SPEED
DISCONNECTION PERIOD
DECREASE IN WIND SPEED
WIND SPEED [m/s]
15
10
5
0
T1
T2
T3
TIME
FIG. 17B
ELECTRIC POWER OUTPUT OF WIND FARM
ELECTRIC POWER OUTPUT OF WIND FARM PS
ELECTRIC POWER [PU]
1
0.02
0
TIME
FIG. 17C
ELECTRIC POWER GENERATED BY WIND TURBINE SYSTEM
ELECTRIC POWER GENERATION LIMIT COMMAND FOR WIND TURBINE SYSTEM 1
PLC0
ELECTRIC POWER GENERATED BY WIND TURBINE SYSTEM 1 PW
FIG. 17D
RECOVERY CHARGE COMMAND FOR BATTERY STORAGE SYSTEM
BATTERY STORAGE 2-1-1
BATTERY STORAGE 2-1-2
BATTERY STORAGE 2-1-3
VARIATION MITIGATION
RECOVERY CHARGING
FIG. 17E
ELECTRIC POWER CHARGED/DISCHARGED BY BATTERY STORAGE SYSTEM
SUPPLIED FROM WIND TURBINE SYSTEM 1
SUPPLIED FROM GAS ENGINE GENERATOR 11
DISCHARGING
CHARGING
-0.1
ELECTRIC POWER CHARGED/DISCHARGED BY BATTERY STORAGE SYSTEM PB
FIG. 17F
ELECTRIC POWER GENERATED BY GAS ENGINE GENERATOR
ELECTRIC POWER GENERATION COMMAND FOR GAS ENGINE GENERATOR 11
PGEC0
ELECTRIC POWER GENERATED BY GAS ENGINE GENERATOR10
PGE
0.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001286076 A